# EUROPÄISCHE PATENTSCHRIFT

(11) **EP 3 529 178 B1**
(45) Veröffentlichungstag und Bekanntmachung des Hinweises auf die Patenterteilung: **09.12.2020**
(21) Anmeldenummer: 17800394.3
(22) Anmeldetag: 20.10.2017
(51) Int. Cl.: B07C 7/00, B25J 9/16, B25D 5/00, G05B 19/418, B26D 5/00

(54) **ABSORTIERUNTERSTÜTZUNGSVERFAHREN, ABSORTIERSYSTEM UND FLACHBETTWERKZEUGMASCHINE**
METHOD FOR ASSISTING WITH SORTING, SORTING SYSTEM AND FLATBED MACHINE TOOL
PROCÉDÉ D'AIDE AU TRI, SYSTÈME DE TRI ET MACHINE-OUTIL À BANC PLAT

(30) Priorität: 21.10.2016 DE 102016120132; 05.04.2017 DE 102017107357
(43) Veröffentlichungstag der Anmeldung: 28.08.2019
(73) Patentinhaber: Trumpf Werkzeugmaschinen GmbH + Co. KG, 71254 Ditzingen (DE)
(72) Erfinder: WALTER, Jonathan, 71735 Eberdingen (DE); WAHL, Eberhard, 73235 Weilheim an der Teck (DE); BAUER, Klaus, 71254 Ditzingen (DE)
(74) Vertreter: Grättinger Möhring von Poschinger Patentanwälte Partnerschaft mbB
(86) Internationale Anmeldenummer: PCT/EP2017/076868
(87) Internationale Veröffentlichungsnummer: WO 2018/073420

(56) Entgegenhaltungen:
- EP-A1- 1 524 063
- EP-A1- 1 630 716
- WO-A1-2012/123033
- DE-A1-102011 054 360
- RUPERT REIF ET AL: "Pick-by-Vision comes on age", COMPUTER GRAPHICS, VIRTUAL REALITY, VISUALISATION AND INTERACTION IN AFRICA, ACM, 2 PENN PLAZA, SUITE 701 NEW YORK NY 10121-0701 USA, 4. Februar 2009 (2009-02-04), Seiten 23-31, XP058114711, DOI: 10.1145/1503454.1503459 ISBN: 978-1-60558-428-7

## Beschreibung

Die vorliegende Erfindung betrifft Verfahren zum Unterstützen des Absortiervorgangs von mit einer Flachbettwerkzeugmaschine erzeugten Werkstücken, insbesondere zum Integrieren des Absortiervorgangs in die Ansteuerung von Flachbettwerkzeugmaschinen. Ferner betrifft die Erfindung entsprechend ausgebildete Flachbettwerkzeugmaschinen und ein Absortiersystem.

Beim Absortieren von Teilen an Werkzeugmaschinen, insbesondere von Laserschnittgut oder gestanzten Werkstücken, insbesondere Blechteilen, vergleicht üblicherweise ein Bediener visuell jedes einzelne geschnittene Teil mit einer Auftragszeichnung des jeweiligen Teils. Ein derartig meist Papier-basiertes Absortieren erfordert ein individuelles Suchen eines speziellen fertigen Teils und dessen Zuordnung zum richtigen Auftrag, so dass eine entsprechende Weiterverarbeitung eingeleitet werden kann. Geschnittene oder gestanzte Blechteile werden dabei nach dem Bearbeitungsvorgang häufig in einem Verbund dem jeweiligen nachgelagerten Produktionsschritt zur Verfügung gestellt. Insbesondere wenn viele unterschiedliche Teilformen geschnitten werden, wird der visuelle Vergleich aufwändig und fehleranfällig. So kann eine hohe Teilevielfalt Probleme bei der Teilerkennung und dem nachfolgenden sortierenden Ablegen in z.B. auftragsspezifisch vorgesehenen Werkstücksammelstelleneinheiten hervorrufen. Werden Teile falsch abgelegt, kann ein nachfolgender Prozess negativ beeinträchtigt werden.

In EP 1 524 063 A1 ist ein Verfahren zur Markierung von Werkstücken offenbart, bei dem eine Platte geschnitten oder gestanzt wird. Dabei projiziert ein Projektor unterschiedliche optische Markierungen auf die auf dem Sortiertisch befindlichen geschnittenen bzw. gestanzten Werkstücke. Dieses Verfahren soll dem Bediener das Absortieren der Werkstücke erleichtern, indem es ihm die Werkstücke anzeigt und ein Ablaufsteuerverfahren für die Weiterverarbeitung oder -verwendung solcher geschnittener oder gestanzter Werkstücke angibt. Bei Werkstücken, die sehr klein sind, wie sie in der Blechbearbeitung häufig vorkommen, werden die Markierungen unter Umständen schlecht erkennbar, so dass Bediener zusätzlich auf das Papier-basierte Absortieren zurückgreifen.

Aus der DE 10 2011 054360 A1 ist eine Werkzeugmaschine zur Herstellung von Werkstücken bekannt, bei der ein plattenförmiges Material in Werkstücke getrennt wird. Das Material wird mit Auflagetischen in einen Bearbeitungsbereich transportiert. Zwischen zwei Auflagetischen ist ein Spalt vorgesehen, der zum Beispiel unterhalb eines Bearbeitungskopfes einer Laserbearbeitungsmaschine in seiner Breite einstellbar ist. Der Spalt erlaubt ein Ausschleusen von Werkstücken oder Abfallteilen.

EP 1 524 063 A1 offenbart eine Markierungsvorrichtung und Ablaufsteuerverfahren für geschnittene oder gestanzte Werkstücke einer Platte mit einem Projektor.

Aus dem Bereich der Logistik sind verschiedene Verfahren zur Unterstützung von Arbeitern bekannt. Beispielsweise offenbart WO 2014/028959 A1 ein Kamera-unterstütztes Verfahren zur Unterstützung eines Arbeiters bei Anlagen zur Manipulation von Waren, EP 1 487 616 B1 ein Verfahren zur automatischen Prozesskontrolle mit einer Arbeitsumgebungserfassung sowie EP 2 161 219 B1 und DE 10 2014 211353 A1 Verfahren der visuellen Unterstützung von manuellen Kommissioniervorgängen. Ferner sind als Beispiel eines digital unterstützten Kommissioniervorgangs sogenannte Pick-by-Light-Implementierungen bekannt.

Beispielsweise offenbart WO 2012/123033 A1 ein Lager- und Kommissioniersystem zum Lagern und Kommissionieren von Stückgütern. An einer manuellen Arbeitsstation manipuliert eine Bedienperson ein Stückgut mit ihren Händen auf eine vorgegebene Weise, die der Bedienperson visuell und/oder auditiv mitgeteilt wird. Beispielsweise bewegt die Bedienperson das Stückgut innerhalb eines Arbeitsbereichs der Arbeitsstation. Ein Bewegungssensorsystem erfasst Bewegungen, vorzugsweise der Hände und/oder Unterarme, der Bedienperson im Arbeitsbereich. Trajektorien der Bewegungen werden mit Referenz-Trajektorien oder Referenz-Volumina im virtuellen Raum verglichen, um Steuersignale zu erzeugen und auszugeben, die der Bedienperson eine richtige oder falsche Durchführung der vorgegebenen Manipulationsweise mitteilen.

Ferner offenbart EP 1 630 716 A1 ein Lager mit einem eine Vielzahl von Fächern aufweisenden Lagerregal und einer Einrichtung zur automatischen Erfassung des Zugriffs auf Fächer des Lagerregals.

Ein Verfahren zur automatischen Prozesskontrolle ist aus DE 102 15 885 A1 bekannt. Ferner sind intelligente Handschuhe für den industriellen Einsatz, insbesondere zur Unterstützung von Arbeitsabläufen bei der industriellen Fertigung, zum Beispiel aus DE 10 2015 111 506 A1 und DE 10 2011 002 952 A1, bekannt.

Weiterhin offenbart DE 10 2008 014 869 A1, eine Plattenaufteilanlage, die einen Handhabungsbereich umfasst, in dem ein Werkstück manuell von einer Person gehandhabt wird. Informationen und/oder Anweisungen zur manuellen Handhabung des Werkstücks werden mittels einer Informationseinrichtung an die Person ausgegeben. Es wird vorgeschlagen, dass ein sich im Handhabungsbereich befindliches Werkstück von einer Werkstückerfassungseinrichtung erfasst wird und das die Handhabungsinformationen an die Person abhängig von Daten, die die Werkstückerfassungseinrichtung bereitstellt, ausgegeben wird.

Einem Aspekt dieser Offenbarung liegt die Aufgabe zugrunde, die Zuordnung von Werkstücken zu erleichtern, Fehler bei der Zuordnung zur reduzieren und/oder die Durchführung sich anschließender Prozesse effizient zu ermöglichen.

Zumindest eine dieser Aufgaben wird gelöst durch ein Verfahren zur Unterstützung eines Absortiervorgangs nach Anspruch 1 und durch eine Flachbettwerkzeugmaschine nach Anspruch 11. Weiterbildungen sind in den Unteransprüchen angegeben.

In einem Aspekt umfasst ein Verfahren zur Unterstützung eines Bedieners bei einem Absortiervorgang von auf einem Sortiertisch angeordneten Werkstücken, die mit einer Flachbettwerkzeugmaschine, insbesondere einer Laserschneid- oder Stanz-Flachbettwerkzeugmaschine, gemäß einem Bearbeitungsplan erzeugt wurden, unter Verwendung eines Ortungssystems zur Bestimmung einer Position einer Hand eines Bedieners im Raum. Das Verfahren weist die folgenden Schritte auf:
Bereitstellen eines Positionsdatensatzes, der die Positionen der mit dem Bearbeitungsplan erzeugten Werkstücke am Sortiertisch umfasst,
Erfassen einer Position der Hand des Bedieners, insbesondere der Sortierunterstützungseinheit, mit dem Ortungssystem,
Abgleichen der Position der Hand des Bedieners, insbesondere der Sortierunterstützungseinheit, mit den Positionen des Positionsdatensatzes,
Identifizieren mindestens eines Werkstücks, das der Position der Hand des Bedieners, insbesondere der Sortierunterstützungseinheit, zugeordnet ist, und
Ausgeben eines Sortiersignals, das Information über das mindestens eine der Position der Hand des Bedieners, insbesondere der Sortierunterstützungseinheit, zugeordnete Werkstück umfasst.

Beispielsweise erfolgt die Positionsbestimmung der Hand mit mindestens einer in seiner Position georteten Sortierunterstützungseinheit oder mittels Bildererfassung des Bedieners bzw. seiner Hand. Z.B. kann der Bediener eine Sortierunterstützungseinheit nah an der Hand tragen. Das Ortungssystem kann die Position der Sortierunterstützungseinheit im Raum insbesondere über einen in der Sortierunterstützungseinheit vorgesehenen aktiven und/oder passiven Sender bestimmen. Alternativ oder zusätzlich kann das Ortungssystem beispielsweise eine oder mehrere Kameras umfassen und mittels Bilderfassung und Bildverarbeitung die Position der Hand im Raum bestimmen. Dadurch kann die Ortung der Position der Hand unabhängig von einer getragenen Sortierunterstützungseinheit bestimmt werden.

In einem weiteren Aspekt umfasst eine Flachbettwerkzeugmaschine, insbesondere Laserschneid- oder Stanz-Flachbettwerkzeugmaschine, eine Bearbeitungseinheit, insbesondere eine Laserschneid- oder Stanz-Bearbeitungseinheit, eine Steuerungseinheit, in der ein Bearbeitungsplan abgelegt ist, zur Ansteuerung der Bearbeitungseinheit zur Erzeugung von räumlich gemäß einem Bearbeitungsbilddatensatz nebeneinander angeordneten Werkstücken, einen Sortiertisch zum Bereitstellen der angeordneten Werkstücke zum Absortieren nach erfolgter Herstellung, ein Ortungssystem und insbesondere mindestens eine nahe einer Hand des Bedieners zu tragende Sortierunterstützungseinheit, wobei die Position der Hand des Bedieners, insbesondere der Sortierunterstützungseinheit, im Raum mit dem Ortungssystem bestimmbar ist, wobei die Steuerungseinheit zum Durchführen des zuvor beschriebenen Verfahrens ausgebildet ist.

In einem weiteren Aspekt umfasst ein Absortiersystem eine zuvor und im Folgenden beschriebene Flachbettwerkzeugmaschine sowie eine übergeordnete Absortierkontrolleinheit, die datentechnisch mit der Flachbettwerkzeugmaschine verbunden ist.

In einigen Weiterbildungen kann das Verfahren zur Unterstützung eines Absortiervorgangs einen oder mehrere der folgenden Schritte umfassen:
Das der der Hand des Bedieners, insbesondere der Sortierunterstützungseinheit, am nächsten gelegene Werkstück kann als das mindestens eine der Position der Hand des Bedieners, insbesondere der Sortierunterstützungseinheit, zugeordnete Werkstück identifiziert werden oder mehrere der Hand des Bedieners, insbesondere der Sortierunterstützungseinheit, am nächsten gelegene Werkstücke können als der Position der Hand des Bedieners, insbesondere der Sortierunterstützungseinheit, zugeordnete Werkstücke identifiziert werden. Insbesondere kann das in einer Bewegungsrichtung der Hand des Bedieners, insbesondere der Sortierunterstützungseinheit, am nächsten gelegene Werkstück als das mindestens eine der Position der Hand des Bedieners, insbesondere der Sortierunterstützungseinheit, zugeordnete Werkstück identifiziert wird.

Basierend auf dem Sortiersignal kann ortskontextsensitive Information bereitgestellt werden, die als werkstückspezifische Information beispielsweise Kundendaten, Informationen zum nachfolgenden Prozessschritt, Anzahl weiterer gleicher Teile, zugeordnete Werkstücksammelstelle oder Auftragsnummer für das mindestens eine der Position der Hand des Bedieners zugeordnete Werkstück umfasst.

Ortskontextsensitive Information kann auf das mindestens eine der Position der Hand des Bedieners zugeordnete Werkstück projiziert werden. Optional kann ein bevorzugt abzusortierendes Werkstück optisch markiert werden oder die Information über das mindestens eine der Position der Hand des Bedieners zugeordnete Werkstück, insbesondere die ortskontextsensitive Information, kann optisch dem oder den Werkstücken als Schriftzug überlagert werden. Ergänzend oder alternativ kann diese auf einer Sortierunterstützungseinheitspezifischen Anzeigeeinheit, insbesondere einer Werkstücksammelstellen-spezifischen Anzeigeneinheit, einer Datenbrille des Bedieners oder einem Überwachungsmonitor, angezeigt werden und/oder als Blinksignal ausgegeben werden.

Ein Entnahmevorgang kann erkannt werden. Insbesondere kann er durch Bestimmen einer Bewegungstrajektorie der Hand des Bedieners, insbesondere der Sortierunterstützungseinheit, durch Auswerten der Positionsdaten der Hand des Bedieners, insbesondere der Sortierunterstützungseinheit, und Erkennen einer Entnahmebewegung in einem Abschnitt der Bewegungstrajektorie und/oder durch Erkennen einer Gestenbewegung mittels der Bewegungstrajektorie der Hand des Bedieners, insbesondere der Sortierunterstützungseinheit, erkannt werden. Entsprechend kann für ein entnommenes Werkstück ein Ablegesignal zum systemunterstützten Ablegen des entnommenen Werkstücks an einer für das entnommene Werkstück vorgesehenen Werkstücksammelstelleneinheit ausgegeben werden.

Ein von einem Bediener durchgeführter Ablegevorgang des entnommenen Werkstücks kann erkannt werden. Insbesondere kann er durch Bestimmen einer Bewegungstrajektorie der Hand des Bedieners, insbesondere der Sortierunterstützungseinheit, nach dem Entnehmen des Werkstücks durch Auswerten der Positionsdaten der Hand des Bedieners, insbesondere der Sortierunterstützungseinheit, und Erkennen einer Ablegebewegung in einem Abschnitt der Bewegungstrajektorie und/oder durch Erkennen einer Gestenbewegung mittels der Bewegungstrajektorie der Hand des Bedieners, insbesondere der Sortierunterstützungseinheit, erkannt werden.

Ferner kann eine Zuordnung von Gesten und Prozessen bereitgestellt werden und ein Bewegungstrajektorie der Hand des Bedieners, insbesondere der Sortierunterstützungseinheit, kann durch Auswerten der Positionsdaten der Hand des Bedieners, insbesondere der Sortierunterstützungseinheit, bestimmt werden. Entsprechend kann eine Geste in einem Abschnitt der Bewegungstrajektorie erkannt werden und ein der Geste zugeordneter Prozess, wie ein Verbuchen eines Entnahmevorgangs oder ein Verbuchen eines Ablegevorgangs, kann durchgeführt werden.

In einigen Weiterbildungen kann das Verfahren zur Unterstützung eines Absortiervorgangs einen oder mehrere der folgenden Schritte umfassen:
Ausgeben eines Ablegesignals in Abhängigkeit vom Sortiersignal zur Unterstützung der Zuordnung des entnommenen Werkstücks durch einen Bediener zu einem nachfolgenden Bearbeitungsschritt, insbesondere zum Ablegen des entnommenen Werkstücks an einer Werkstücksammelstelleneinheit,
Überwachen eines von einem Bediener durchgeführten Ablegevorgangs des entnommenen Werkstücks, wobei das Überwachen eines Ablegevorgangs beispielsweise eine Gewichtsüberwachung einer spezifischen Werkstücksammelstelle und/oder eine Überwachung einer Bewegungstrajektorie oder Bewegungsteiltrajektorie des entnommenen Werkstücks oder eines die Bewegung bewirkenden Objekts umfasst,
Ausgeben eines Sortiervorgangvollendungssignals, wenn der Ablegevorgang einem dem Sortiersignal zugeordneten Ablegevorgang entspricht, und optional Aktualisieren einer Werkstücksammelstellen-spezifischen Anzeige bzgl. der Ablage des entnommenen Werkstücks,
Ausgeben eines Fehlersignals, wenn der Ablegevorgang von einem dem Sortiersignal zugeordneten Ablegevorgang abweicht, und optional Anzeigen von Information bezüglich des dem Sortiersignal zugeordneten Ablegevorgangs,
Überwachen eines Ablegevorgangs mindestens eines entnommenen Werkstücks in einer Ausschusssammelstelle durch einen Bediener, und Zuordnen des mindestens einen entnommenen Werkstücks als Ausschussstück und optional Aufnehmen des Ausschussstücks in eine Fehlteilliste,
Ausgeben eines Ergänzungsproduktionssignals an ein Produktionsleitsystem, und
Abgleichen von Produktionsparametern des entnommenen Werkstücks mit einem nachfolgenden Bearbeitungsplan und, bei Übereinstimmung der Produktionsparameter mit dem nachfolgenden Bearbeitungsplan und einer Verfügbarkeit bezüglich des entnommenen Werkstücks, Ergänzen des nachfolgenden Bearbeitungsplans mit einem Erzeugungsschritt zur Erzeugung eines Ersatzwerkstücks für das Ausschussstück.

Die einzelnen Verfahrensschritte können mit einer Bearbeitungszeit, insbesondere teilweise parallel, derart schnell verarbeitet werden, dass das erzeugte Sortiersignal in weniger als 0,5 s, insbesondere in weniger als 0,2 s, insbesondere in weniger als 0,1 s nach der Positionserfassung der Hand des Bedieners erzeugt wird. Allgemein kann das Sortiersignal Untersignale umfassen, die jeweils einem identifizierten oder entnommenen Werkstück zugeordnet sind, wenn z.B. mehrere Werkstücke identifiziert oder entnommen wurden. Ferner können allgemein Signale als Information auf einer Datenbrille eines Bedieners und/oder einem Überwachungsmonitor eines Steuerungssystems und/oder als Blinksignale ausgegeben werden.

Ferner kann die Flachbettwerkzeugmaschine optional eine bewegbare Werkstücksammelstelleneinheit und/oder eine Ausschusssammelstelle umfassen. Zusätzlich oder alternativ kann sie ein System zum Überwachen eines Ablegevorgangs, insbesondere zur Gewichtsüberwachung einer spezifischen Werkstücksammelstelleneinheit, und/oder eine Erfassungseinheit zum optischen Erfassen von Bildsignalen im sichtbaren und/oder infraroten Wellenlängenbereich und/oder zum Schallwellen-basierten Erfassen von Ultraschall-Bildsignalen mit entsprechenden Sensoren bezüglich des Sortiertischs umfassen.

Die Sortierunterstützungseinheit kann einen aktiven Sender und/oder einen passiven Sender aufweisen, deren Position vom Ortungssystem erfasst wird. Ferner kann der Sortierunterstützungseinheit eine Sortierunterstützungseinheit-spezifische Anzeigeeinheit zugeordnet sein, auf der die Information über das mindestens eine der Position der Sortierunterstützungseinheit zugeordnete Werkstück angezeigt wird.

Die Werkstücksammelstelleneinheit kann ferner einen Ablegebereich für Werkstücke, die im Rahmen eines Bearbeitungsplans von der Werkzeugmaschine erzeugt wurden, und eine Anzeigeeinheit aufweisen, die dazu ausgebildet ist, von der Steuerungseinheit der Werkzeugmaschine Information über die abgelegten Werkstücke zu empfangen und für einen Bediener auszugeben. Die Anzeigeeinheit kann ferner Information über die Anzahl der abgelegten Werkstücke, einen nachfolgenden Bearbeitungsschritt und einen zugrundeliegenden Auftrag empfangen und ausgeben. Beispielsweise ist die Anzeigeeinheit eine reale, beispielsweise als E-Ink-Anzeige, am Ablegebereich angebrachte und/oder eine digital im Rahmen einer Steuerungsdarstellung Anzeigeeinheit, die beispielsweise im Rahmen eines z.B. auf einem Tablet angezeigten User-Interfaces emuliert wird.

Die Erfinder haben insbesondere erkannt, dass die hierin offenbarten Konzepte und deren Anwendung in den hierin beschriebenen Vorrichtungen bei unterschiedlichsten Materialien und/oder Oberflächeneigenschaften von Werkstücken geeignet sind und Vorteile beim Absortieren bereitstellen können. Derartige Werkstücke umfassen z.B. Werkstücke aus Blech, Glas, Halbleitersubstrat-Strukturen, Leiterplatten-Strukturen und Kunststoffteile, wobei die Materialien selbst, und insbesondere deren Oberflächeneigenschaften, Licht transmittieren oder zumindest teilweise reflektieren können. Insbesondere bei derartigen Werkstücken wurde erkannt, dass z.B. die Erkennbarkeit von projizierten Markierungen auch bei größeren Werkstücken oft unzureichend sein kann und dadurch Bediener zusätzlich auf das Papier-basierte Absortieren zurückgreifen. Die hierin offenbarten Konzepte können dagegen gerade auch für derartige Werkstücke die Effizienz beim Absortieren steigern.

Ferner hat sich gezeigt, dass die hierin offenbarten Konzepte und deren Anwendung in den hierin beschriebenen Vorrichtungen den zusätzlichen Nutzen für den Bediener aufweisen können, dass dieser nicht an ein vorgegebenes Ablaufsteuerverfahren gebunden ist, nach welchem er die Teile abzusortieren hat. So haben Versuche mit unterschiedlichen Bedienern beim Absortieren mit und ohne Einsatz der hierin offenbarten Konzepte überraschenderweise ergeben, dass ein Absortieren meist dann schneller und effizienter erfolgt, wenn ein Bediener in der Reihenfolge des Abortierens seinem eigenen Plan nachgehen kann und nicht an eine externe Vorgabe gebunden wird. Dies beruht unter anderem evtl. auf den spezifischen Umständen beim Absortieren von Werkstücken, die mit Flachbettwerkzeugmaschinen erstellt werden. Derartig erzeugte Werkstücke kommen zusammen mit dem Schnittabfall, der z.B. in Form eines Restgitters ausgestaltet ist, auf dem Sortiertisch an. Aufgrund des Trennvorgangs können die Werkstücke oftmals noch mit dem Schnittabfall (dem Restgitter) durch winzige Restverbindungen (sogenannte Microjoints) verbunden sein. Bei Absortieren trennt der Bediener nun die Werkstücke erst vom Restgitter ab und sortiert sie dann auf Werkstück-spezifische Ablagen. Wenn einzelne Werkstücke nicht mehr ganz fest an ihrem vorgegeben Platz auf dem Sortiertisch liegen, bzw. noch mit dem Restgitter verbunden sind und so z.B. schon schräg im Restgitter hängen, kann es für den Bediener vorteilhaft sein, diese zuerst abzusortieren. Dieses Vorgehen gilt insbesondere für biegefeste Werkstücke, so dass die hierin offenbarten Konzepte und deren Anwendung in den hierin beschriebenen Vorrichtungen auch besonders geeignet für das Absortieren von biegefesten Werkstücken sein können. Ein biegefestes Werkstück kann beispielsweise aus Blech, Glas oder Kunststoff sein. Ferner sind aus einem Halbleitersubstrat oder einer Leiterplatte geschnittene (oder gestanzte) Teile oft biegefest.

Allgemein kann eine Flachbettwerkzeugmaschine eine Laserschneid- oder Stanz-Flachbettwerkzeugmaschine sein, die nur mittels Laser oder nur mittels Stanzen trennt. Ferner kann eine Flachbettwerkzeugmaschine eine Kombinationsmaschine sein, die beide Trennverfahren umsetzt. Auf der Flachbettwerkzeugmaschine können auch weitere Verarbeitungsschritte wie z.B. Entgraten, Biegen, Falzen, Schweißen, Bohren, Gewindeschneiden, etc. ausgeführt werden.

Ferner sind die hierin offenbarten Konzepte und deren Anwendung in den hierin beschriebenen Vorrichtungen auf das Bereitstellen von unterstützender Information möglichst in Echtzeit ausgelegt. Die zeitnahe Bereitstellung ist wesentlich, da der Absortiervorgang, dessen zeitlicher Ablauf vom Fluss und der Geschwindigkeit der manuellen Vorgänge des Bedieners bestimmt wird, gerade möglichst nicht (durch z.B. Warten auf ein Sortiersignal) verlangsamt werden soll. Zumindest sollte zeitnah eine Rückkopplung über erfolgte Tätigkeiten (z.B. der richtig oder falsch erfolgten Zuordnung zu einer Sammelstelle) gegeben werden. Somit ist beispielsweise eine korrekte Durchführung der Buchungen der verschiedenen Sortiervorgänge in Echtzeit wesentlich für die Implementierung der hierin offenbarten Konzepte im Rahmen einer intelligenten Fabrik. Nur bei einer zeitnahen Erkennung kann das System vernünftige Vorschläge erstellen und dem Bediener zugänglich machen. Die vorgeschlagene Absortierunterstützung führt hierfür die wichtigen Schritte wie Positionsabgleich und Verbuchungen im Produktionsleitsystem (Manufacturing Execution System: MES) z.B. automatisch im Hintergrund aus. Das Produktionsleitsystem ist Teil eines vielschichtigen Managementsystems zur Überwachung und Durchführung einer zumindest teilautomatisierten Produktion. Es ist z.B. in die Ausführung, Steuerung oder Kontrolle der Produktion, insbesondere einzelner Produktionsschritte, in Echtzeit eingebunden. Allgemein werden die Komponenten und Systemstrukturen derart ausgelegt, dass die einzelnen Verfahrensschritte mit einer kurzen Bearbeitungszeit, insbesondere teilweise parallel, verarbeitet werden. Bevorzugt wird das Sortiersignal während der Bewegung, z.B. in weniger als 0,5 s, insbesondere in weniger als 0,2 s, und insbesondere ferner in weniger als 0,1 s, nach der Positionserfassung der Hand des Bedieners erzeugt.

In einigen Ausführungsformen wird einem Bediener beim Aufnehmen eines z.B. geschnittenen Teils angezeigt, in welche Kiste (als Beispiel für eine Werkstücksammelstelleneinheit) dieses zu legen ist. Die Anzeige kann insbesondere optisch erfolgen. Denkbar ist aber z.B. auch eine akustische Anzeige bzw. akustische Unterstützung einer optischen Anzeige. Dabei kann gleichzeitig automatisch eine spezifische Teilzugehörigkeit im übergeordneten System verbucht werden, sobald die Ablage erfolgt ist. Bei fehlenden Teilen, z.B. aufgrund von Ausschuss oder Maschinenfehlfunktionen, kann eine Nachproduktion direkt über eine Schnittstelle zum MES initiiert werden.

Das Werkzeugmaschinensystem umfasst in einigen Ausführungsformen einen Projektor und/oder eine oder mehrere Kameras. Diese können beispielsweise festinstalliert am Maschinengehäuse Bildinformation auf den oder vom Sortiertisch einer Flachbett- oder Stanz-Laserschneidmaschine projizieren bzw. aufnehmen. Nach Kalibrierung des Projektors/der Kamera auf die Blechoberfläche/den Sortiertisch kann mit diesen zusätzliche Information ausgegeben werden bzw. erfasst werden. Beispielsweise kann aus den Bildern einer oder mehrerer Kameras die Position der Hand berechnet werden.

Ein in das Verfahren zur Unterstützung eines Absortiervorgangs integrierter Projektor erlaubt es, positionsspezifisch Zusatzinformation auf einem Teilbereich des Sortiertischs auszugeben. Dazu wird z.B. auf die Werkstücke im Bereich der Hand des absortierenden Bedieners Zusatzinformationen projiziert, die dem Bediener das Identifizieren und Aufnehmen eines bevorzugten oder zu diesem Zeitpunkt von besonderem Interesse seienden Werkstücks erleichtert.

Eine in das Verfahren zur Unterstützung eines Absortiervorgangs integrierte Kamera kann es ferner ermöglichen, z.B. mittels Bildverarbeitung ein jeweils vom Bediener gegriffenes Teil, z.B. anhand seiner Form und/oder Lage auf dem Sortiertisch, zu identifizieren. Die Bildverarbeitungsalgorithmik kann insbesondere auf die Auftragsinformation zugreifen und somit eine Identifizierung der Teile erleichtern. Ferner kann mittels Laser bzw. Markierlaser z.B. ein QR-Code oder eine Materialnummer während der Bearbeitung eingraviert werden. Mithilfe der Kamera kann diese Codierung ausgelesen und anschließend zur Identifikation und Absortierunterstützung eingesetzt werden.

Alternativ oder ergänzend kann ein Bediener eine Datenbrille einsetzen, welche ergänzende Bildinformation für die Teilerkennung liefern kann und bei der zusätzlich zum real erfassten Bild der Umgebung weitere Informationen, beispielsweise der QR-Code oder eine Materialnummer, innerhalb des Sichtbereiches eingeblendet werden.

Eine übergeordnete Absortierkontrolleinheit des Absortiersystems kann aufgrund des Abgleichs der durch die Positionsauswertung gewonnenen Information mit der Auftragsinformation die Werkstückerkennung unterstützen und z.B. die vorgesehene Ablage identifizieren. Z.B. wird dem Bediener über einen Monitor oder eine Datenbrille die Ablage sichtbar gekennzeichnet und der Bediener erhält eine Rückmeldung, ob das Teil korrekt abgelegt wurde.

Durch Abgleich der erfassten entnommenen Werkstücke mit Schnittanweisungen des Bearbeitungsplans (z.B. eines Schneidprogramms) kann erkannt werden, dass ein produziertes Werkstück aus dem Arbeitsraum entnommen wurde. Über eine Schnittstelle zum MES kann ferner ermittelt werden, zu welcher Station der Verarbeitung dies Werkstück als nächstes zu transportieren ist. Ein optisches Signal an den auch als Ladungsträgern bezeichneten Werkstücksammelstelleneinheiten, wie Paletten, z.B. Europaletten oder Transportkisten, kann dabei derart angesteuert werden, dass angezeigt wird, in welche das Teil abgelegt werden muss. Optische Signale umfassen beispielsweise spezifische Displays, eine Aktivierung von spezifischen LEDs oder eine Projektion von Information auf den Ladungsträger.

Eine Bewegungsüberwachung der den Ladungsträger ablegenden Hand kann ferner die korrekte Ablage erkennen und überprüfen. Durch eine Rückmeldung an das MES kann bei Ausschussteilen, die z.B. an einer Ausschusssammelstelle abgelegt wurden, beispielsweise zum nächstmöglichen Zeitpunkt automatisch eine ergänzende Nachproduktion eingeleitet werden.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z.T. erhebliche Zeitansparung im Prozess von der Herstellung einer erforderlichen Teilanzahl bis zur nachfolgeprozesskorrekten Ablage bewirken, Fehler bei der Zuordnung vermeiden und intuitive Arbeitsabläufe durch z.B. automatische Verbuchung von Werkstücken ermöglichen. Mehrere Aufträge können in einer Tafel (z.B. in einem zu beschneidenden Blech) prozesssicher umgesetzt werden und eine auftragsübergreifende Separierung der geschnittenen Teile für die jeweiligen Folgeprozesse wird möglich. Ein mit den hierin offenbarten Verfahren unterstütztes Absortieren von mehreren auf einer Tafel umgesetzten Aufträgen ermöglicht ein automatisches (zyklisches) neues Schachteln aller offenen Aufträge.

So können eine flexible Abarbeitung der Teilentnahme und ein papierloser Prozessablauf (mit der begleitenden Zeiteinsparung in der Arbeitsvorbereitung) eine Einbindung von Laserschneidmaschinen oder Stanzmaschinen in den teilautomatisierten Herstellungsprozess effizienter gestalten. Ferner kann durch die Fehlervermeidung und die automatische, korrekte Verbuchung die Basis für eine datenbasierte Echtzeitsteuerung der Blechfertigung gelegt werden. Entsprechend werden auch Maschinen, die bei der Erstellung von kleinen Losgrößen eingesetzt werden, in eine von MES im Rahmen der Industrie 4.0 gesteuerte Blechfertigung einbindbar.

Ferner kann der Einsatz von den Bediener einschränkenden mobilen Handgeräten wie Scanner oder Tablet entfallen.

Mit den hierin offenbarten Konzepten können der Produktionsablauf einer intelligenten Fabrik und insbesondere deren indirekte Prozesse effizienter gestaltet werden. Dies umfasst die bereits zuvor erläuterten Vorteile durch die Ausgabe von Signalen an einen Bediener beim Absortiervorgang, wie ein Anzeigen der einem Werkstück zugeordneten Werkstücksammelstelleneinheit oder die Bereitstellung von Information über fehlsortierte Werkstücke und nachfolgende Bearbeitungsschritte. Allerdings lassen sich die Konzepte auch in Prozesse, wie den Transport zu einem nachfolgenden Prozessschritt, einbinden, die die Echtzeit-aktuelle Information über den Status eines Auftrags sowie beispielsweise über die Anzahl von bereits zugeordneten Werkstücken nutzen können. Zusammen mit weiteren Ortungsvorrichtungen ergibt sich überdies die Möglichkeit, die aktuelle Position einer Werkstücksammelstelleneinheit an z.B. das MES zu kommunizieren und in einem Kontrollstand anzuzeigen oder die aktuelle Position vor Ort mitzuteilen, z.B. durch Blinken oder durch akustische Signale.

Die Vorteile der hierin offenbarten Konzepte umfassen das Zugänglichmachen wichtiger Informationen (insbesondere direkt vor Ort beim Bediener), das Beitragen zur Realisierung einer papierlosen Fertigung und eine erhebliche Zeitreduzierung und damit eine höhere Verfügbarkeit und Produktivität von Werkzeugmaschinen. Ferner lassen sich die Konzepte leicht umsetzen, da Handschuhe schon heute vom Bediener zum Arbeitsschutz getragen werden und leicht mit entsprechenden Sortierunterstützungseinheiten versehen werden können. Ferner kann durch die hierin offenbarten Konzepte die Informationskette durch die automatische Weitergabe der Teileinformationen an den Ladungsträger (Werkstücksammelstelleneinheit) während des Absortierens aufrechterhalten, d.h. von der Werkzeugmaschine auf die Werkstücksammelstelleneinheiten übertragen, werden. Dadurch erhöht sich die Transparenz in der Fertigung und es wird möglich, Teile im Werk schnell und einfach zu lokalisieren. Die Datenweiterleitung der Teileinformationen erhöht allgemein die Prozesssicherheit. Die Mitlieferung des Lagerfaches und der zugehörigen Information auf dem Ladungsträger kann ferner die Programmierung einer nachfolgenden Maschine, beispielsweise eines nachfolgenden Bearbeitungsprozesses, erleichtern.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
Fig. 1 eine schematische räumliche Darstellung eines Ausschnitts einer intelligenten Fabrik mit einer Laserschneid- oder Stanz-Flachbettwerkzeugmaschine,
Fig. 2 eine schematische räumliche Darstellung einer beispielhaften Anordnung von Werkstücken auf einem Absortiertisch,
Fig. 3 schematische beispielhafte Darstellungen eines Positionsdatensatzes und der Identifizierung eines Werkstücks,
Fig. 4 eine schematische räumliche Darstellung einer beispielhaften Überwachung eines Ablegevorgangs eines entnommenen Werkstücks und
Fig. 5 ein Flussdiagramm zur Verdeutlichung eines beispielhaften Verfahrensablaufs bei der Unterstützung eines Absortiervorgangs.

Hierin beschriebene Aspekte basieren zum Teil auf der Erkenntnis, dass bei Laserschneid-(oder Stanz-) Flachbettwerkzeugmaschinen ein genauer Schneidplan (oder Stanzplan) vorliegt, der in Kombination mit einem Erfassen der Position einer absortierenden Hand bezüglich des Sortiertischs, auf dem das erzeugte Schnittgut angeordnet ist, zur Unterstützung des manuellen Absortiervorgangs und zum Gewinnen von für weitere Prozessabläufe geeigneter Information genutzt werden kann. Dabei wird vorgeschlagen, mit einem Ortungssystem die Position der absortierenden Hand mittels einer nahe der Hand getragenen Sortierunterstützungseinheit zu erfassen, die Sensoren zur Ortserfassung aufweist.

Durch die Erweiterung von Flachbettsystemen mit einer Innenraum-Ortung und Schnittstellen zu einer Steuerungseinheit können die Position der Werkstücksammelstelleneinheiten festgestellt und/oder die Bewegung der Hand des Bedieners festgehalten werden. Solch eine Ortung kann z.B. über ein Ultra-Wide-Band-System aus vier oder mehr sogenannten "Anchors" und einem oder mehreren "Tags" erfolgen. Die Anchors dienen als Receiver und können stationär um den Arbeitsraum positioniert werden. Die Tags können an der Hand des Bedieners und optional an allen Werkstücksammelstelleneinheiten angebracht werden und dienen zur Positionsbestimmung derselben. Weitere Systeme zur Innenraum-Ortung umfassen z.B. Bluetooth, WiFi, Infrarot und RFID.

Eine derartige Nahfeldortung kann ferner beispielsweise beim Absortieren eingesetzt werden, indem z.B. der Ort einer Hand (insbesondere eines intelligenten Handschuhs, der mit dem Ortungssystem wechselwirkt) z. B. von der Werkstücksammelstelleneinheit aus geortet wird. Entnimmt die "Hand" eines Bedieners ein Bauteil vom Restgitter, wird der Bauteilort im MES vom Restgitter auf die Hand gebucht. Bewegt sich die Hand in die Nähe einer Werkstücksammelstelleneinheit (z. B. in die Nähe eines Ortungssystems der Werkstücksammelstelleneinheit), wird im MES gebucht, dass dieses Teil an der zugehörigen Werkstücksammelstelleneinheit abgelegt wurde. Zum einen kann das Ortungssystem erkennen, dass die Hand mit dem Werkstück in die Nähe der Werkstücksammelstelleneinheit kam. Zum anderen kann ein übergeordnetes System (z.B. das MES) die Werkstücksammelstelleneinheit und die Handposition verknüpfen.

Die hierin beschriebenen Konzepte basieren entsprechend auf einem Ortungssystem zur Positionserkennung eines Positionssensors an einem Bediener beim Absortieren von Schnittgut. Die Umsetzung kann beispielsweise mit einem vom Bediener getragenen Datenhandschuh oder einem anderen sich am Bediener befindenden Medium wie ein Ring, ein Armband, eine Uhr (Smartwatch) oder ein Fingerhut (allgemein auch als Wearables bezeichnet) erfolgen.

Die Bilddaten können neben fest installierten Kameras auch ergänzend oder alternativ mit einer Datenbrille, die vom Bediener getragen wird, erfasst werden. So kann die Datenbrille mittels einer darin enthaltenen Kamera über den Weg der Bildverarbeitung grundsätzlich ein Tracking der Hand im Raum ermöglichen.

Derartige Positionssensoren weisen einen oder mehrere Sender und evtl. Sensoren auf. Datenhandschuhe umfassen derartige Sensoren zum Beispiel am Handgelenk oder am Finger. Die Positionssensoren erlauben es, ortskontextsensitive Information zur Umgebung in den Absortiervorgang einzubinden, und beispielsweise selektiv zugehörige Information auszugegeben, diese z.B. auf einer Anzeige am Handschuh oder allgemein im Sichtbereich des Absortierers anzuzeigen.

Ferner erlauben es die hierin beschriebenen Konzepte das System über Gesten zu steuern. Beispielsweise kann der Greifvorgang erfasst oder von einer spezifischen Gestenbewegung wie ein Absenken der Hand oder ein Fingerzeig begleitet werden. Alternativ oder ergänzend zur Gestensteuerung ist z.B. eine Anbindung an einen Fußschalter o.ä. möglich. Denkbar ist auch eine Sprachsteuerung oder ein Schaltsensor am Finger/Hand/Arm.

Über den am Bediener befestigten Sender erkennt das Ortungssystem die Position des Absortiervorgangs durch den Bediener und kann diese mit den bekannten Positionen der Teile verrechnen. Entsprechend kann mindestens ein der Position der Hand des Bedieners, insbesondere der Sortierunterstützungseinheit, zugeordnetes Werkstück identifiziert werden und über ein entsprechend erzeugtes Sortiersignal kann dann Information über das der Position der Hand des Bedieners, insbesondere der Sortierunterstützungseinheit, zugeordnete Werkstück ausgegeben werden. Dadurch wird z.B. eine Zuordnung des mit dem Datenhandschuh entnommenen Werkstücks ermöglicht und basierend auf der Lage des Senders im Ortungsfeld kann ortskontextsensitive Information zur Umgebung angezeigt werden. Durch die Zuordnung, eventuell ergänzt mit einer Bewegungserkennung, insbesondere durch Gestenerkennung, kann ein entnommenes Werkstück an der Entnahmestelle ausgebucht und einer Ablagestelle zugeordnet und zugebucht werden.

Die hierin beschriebenen Konzepte betreffen insbesondere Flachblechanlagen, die mittels Stanzen oder Laserschneiden aus sogenannten Tafeln (Ausgangsbleche mit vorbestimmter Dicke und vorbestimmtem Flächenmaß) Werkstücke für nachfolgende Bearbeitungsschritte erzeugen. So kann mit einer durch den Lasereinsatz sehr flexiblen Blechbearbeitung ein Werkstück in eine frei wählbare, bei Flachbettmaschinen flache, Form überführt werden. Nachfolgende Biege- und Schweißprozesse erzeugen dann ein räumliches Produkt. Bei derartigen Laserschneid- oder Stanz-Flachbettwerkzeugmaschinen ist ein Bearbeitungsplan (z.B. Schneidplan) als Eingangsparameter in der Maschinensteuerung hinterlegt, der die genaue Position der erzeugten Werkstücke bezüglich des Sortiertischs enthält.

Beim Bereitstellen des Positionsdatensatzes, der die Positionen der mit dem Bearbeitungsplan erzeugten Werkstücke auf dem Sortiertisch umfasst, kann neben dem ursprünglichen (Schneid-) Bearbeitungsplan ferner zusätzliche, z.B. während des Bearbeitungsvorgangs gewonnene, Information berücksichtigt werden. Diese umfasst beispielsweise eine Koordinatentransformation zur Anpassung des (Schneid-) Bearbeitungsplans an die tatsächliche Lage des Rohblechs oder nach der (Schneid-) Bearbeitung vorgenommene Verschiebungen. Derartige Information wird beispielsweise in der Steuerungseinheit mit dem (Schneid-) Bearbeitungsplan verknüpft abgelegt und bei Bedarf auch mit dem MES kommuniziert.

Sinkende Losgrößen, d.h. das Erfordernis in kurzen Zeitfenstern kleine Stückzahlen herstellen zu können, und überdies individualisierte Produkte sind aktuelle Herausforderungen an das Stanzen oder Laserschneiden, die sich insbesondere auf die Automatisierung von Produktionsabläufen in Blechfertigungsunternehmen auswirken. Die hierin beschriebenen Konzepte können insbesondere bei kleineren Losgrößen IT-gestützt Abläufe koordinieren und integrieren, diese einzelnen Maschinen zuordnen und bei einer anpassbaren Produktionsplanerstellung mitwirken.

Ziel ist es dabei, den hohen Anforderungen durch unterschiedlichste Produkte in sogenannten intelligenten Fabriken (den "smart Factories") gerecht zu werden. Die Erfinder haben erkannt, dass zur effizienteren Gestaltung von Fertigungsprozessen insbesondere Potenzial in den indirekten Prozessen, d.h. den dem Trennprozess vor- und nachgelagerten Schritten, liegt. Werden z.B. das Absortieren und das Ausgleichen von Ausschusswerkstücken effizienter und fehlerfreier ermöglicht, kann die Durchlaufzeit eines Auftrags über alle Fertigungsprozesse hinweg verkürzt und eine effizientere Auslastung der intelligenten Fabrik erreicht werden.

Eine transparente Fertigungsplanung, in der indirekte Prozesse vernetzt sind, bringt Übersicht in die Produktionsabläufe und erlaubt es, diese zu optimieren. Dabei wird der Bediener zum Prozessmanager, der mit seinem Überblick den Materialfluss gerade bei Aufträgen mit kleinen Losgrößen steuert.

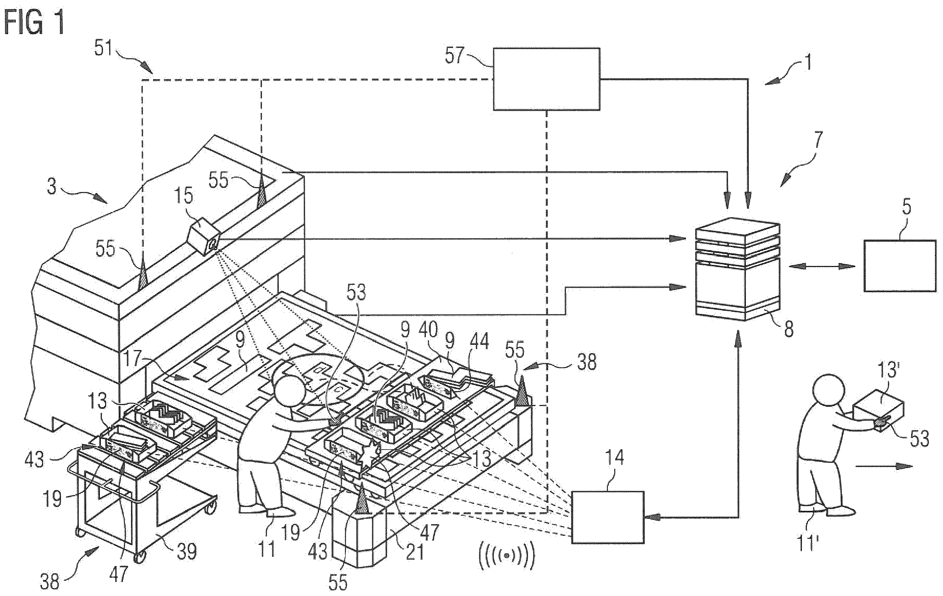

Fig. 1 zeigt eine Übersicht einer intelligenten Fabrik 1 ("smart factory"), die sich selbst anpassende Produktionsressourcen, wie eine beispielhaft dargestellte Laserschneid- oder Stanz-Flachbettmaschine 3, und ein zugehöriges MES 5 umfasst. Üblicherweise bilden mehrere derartige Flachbettwerkzeugmaschinen-Installationen und Nachbearbeitungsstationen die intelligente Fabrik 1 aus. Über ein Netzwerk 7 laufen die virtuellen und physischen Produktionselemente und Produktionsschritte, insbesondere die Informationen über Werkstücke 9 (erforderliche Anzahl, Form, Material, Typ...), im MES 5 zusammen. Eine Steuerungseinheit 8, wie ein PC, Rechenknoten oder ähnliche geeignete Hardware, dient der Ansteuerung z.B. der Flachbettmaschine 3 sowie weiterer ihr zugeordneter Komponenten. Die Steuerungseinheit 8 ist insbesondere zum Unterstützen des Absortierens der Werkstücke 9 durch einen Bediener 11 auf Werkstücksammelstellen 13 während eines Echtzeit-Betriebs der intelligenten Fabrik 1 ausgebildet. Das zugrundeliegende Rechensystem weist beispielsweise digitale Prozessorsysteme mit Dateneingänge und Steuerungsausgänge aufweisenden Mikroprozessorkreisen auf, die gemäß computerlesbaren, auf einem computerlesbaren Medium gespeicherten, Anweisungen betrieben werden. Üblicherweise umfasst die Steuerungseinheit 8 eine hohe Rechenleistung für die Echtzeitunterstützung sowie einen Langzeit- (nicht volatilen) Speicher zum Speichern der Programmanweisungen als auch einen sehr schnellen Kurzzeit- (volatilen) Speicher zum Speichern von erfassten Daten und Auswertungsergebnissen des Verfahrens zur Unterstützung des Bedieners.

Der Bediener 11 sortiert die Werkstücke 9, die einer von der Flachbettmaschine 3 ausgegebenen Tafel 17 entnommen werden, den Werkstücksammelstelleneinheiten 13 zu. Dabei werden unter Verwendung der nachfolgend erläuterten Sortierunterstützungseinheit die Entnahmeentscheidungen hinsichtlich des jeweils als nächstes zu entnehmenden Werkstücks sowie des sich anschließenden Ablegevorgangs in die jeweilige Werkstücksammelstelleneinheit unterstützt.

Beispielsweise kann dem Bediener, während er die Entscheidung trifft, welches der Werkstücke er entnehmen will, Information über die Werkstücke angezeigt werden, die nahe seiner Hand und damit in seinem Greifbereich vorliegen. Ferner kann ihm nach Entnahme der Werkstücke 9 beispielsweise auf einer Anzeige 19 einer zugehörigen Werkstücksammelstelleneinheit 13 angezeigt werden, dass er in dieser das Werkstück 9 ablegen soll. Auf der Anzeige 19 kann zusätzlich der Status (allgemein Werkstückinformation) angezeigt werden, z.B. die Anzahl der abgelegten Werkstücke 9, wie viele noch fehlen oder ob ein Fehler erkannt wurde.

Auf diese Weise kann der Bediener 11, dem als "augmented operator" umfassende Informationen möglichst in Echtzeit zur Verfügung gestellt werden, die Anlage steuern und die Fertigung effizient gestalten und überwachen. Als Erfahrungsträger und Entscheider behält der Bediener 11 die finale Entscheiderfunktion in allen relevanten Abläufen des Produktionsnetzwerks. So kann er Zielvorgaben situativ und kontextabhängig beeinflussen, unterstützt von ITbasierten Assistenzsystemen, wie dem hierin offenbarten Verfahren zur Unterstützung eines Absortiervorgangs.

Die Flachbettmaschine 3 ist eine im Hinblick auf die Produktionsplanung mit anderen Komponenten in Kontakt stehende "social machine", die insbesondere mit der Auftragssteuerung und dem MES 5 intelligent vernetzt ist. So kann z.B. auf mögliche Abweichungen im Schneidprozess eigenständig und situationsabhängig reagiert werden.

In einer klassischen Fertigung würde ein Bediener Arbeitspapiere zu Aufträgen immer wieder zur Hand nehmen, manuell die Aufträge starten, Teile sortieren und diese Laufzetteln und Einrichteplänen zuordnen. Entsprechend häufig kann die Maschine so über längere Zeiträume still stehen.

Im Unterschied dazu optimiert die vernetzte Fertigung in der intelligenten Fabrik 1 ihre indirekten Prozesse und bringt Übersicht in die durchzuführenden Produktionsabläufe. Dabei wird der Bediener 11 zum Prozessmanager, der den Überblick behält und den Materialfluss regelt.

In Fig. 1 sind ferner ein Wagen 39 und eine über dem Sortiertisch 21 verfahrbare Brücke 40 als beispielhafte Absortiervorrichtungen 38 dargestellt. Auf den Absortiervorrichtungen 38 stehen jeweils eine oder mehrere Werkstücksammelstelleneinheiten 13. An jeder Werkstücksammelstelleneinheit 13 befindet sich eine Anzeigeeinheit 43 mit der Anzeige 19 und eine Signalabgabevorrichtung 47. Alternativ oder ergänzend zur optischen Anzeige sind akustische und haptische Signale möglich. Ferner kann eine kombinierte Signal-/Anzeigeeinheit 44 verwendet werden, die beispielsweise nahe dem Ablegeort größerer Werkstücke abgestellt wird.

Allgemein ist das Abräumen und Sortieren z.B. geschnittener Teile zeitintensiv, fehleranfällig und in dieser komplexen Form (mehrere Aufträge aus einem Rohling) eine große Herausforderung. Mit den hierin vorgeschlagenen Konzepten können beispielsweise Fertigungsaufträge für kleine Stückzahlen pro Los für z.B. verschachtelte Teile effizient absortiert werden.

Wie nachfolgend ausführlicher erläutert wird, kann durch das unterstützend bereitgestellte automatisierte Orten der Hand des Bedieners 11 überwacht werden, welches Werkstück 9 einer von der Flachbettmaschine 3 ausgegebenen Tafel 17 entnommen wurde. Anschließend kann sich eine Anzeige 19 an einer der intelligenten und vernetzten Werkstücksammelstelleneinheit 13 melden und dem Bediener 11 den z.B. vom MES 5 zugeordneten Ablageort anzeigen. Die Ortung der Hand kann zusätzlich eine Verbuchung des Ablagevorgangs im MES 5 ermöglichen. Ferner können die als z.B. intelligente Kisten ausgeführten Werkstücksammelstelleneinheiten 13 auf z.B. einem E-Ink-Display aktuelle vom MES 5 erhaltene Auftragsinformationen ausgeben. Sie ermöglichen z.B. eine (evtl. räumlich grobe) Ortung und können beispielsweise durch Blinken dem Bediener eine intuitive "Feinsuche" ermöglichen. Beispielsweise sind die Werkstücksammelstelleneinheiten 13 mit einem eigenen Datenversorgungssystem 14 verbunden, welches insbesondere mit dem MES 5 und der Steuerungseinheit 8 zum Datenaustausch in Verbindung steht.

Nach erfolgter Absortierung einer Anzahl von benötigen Werkstücken in eine Werkstücksammelstelleneinheit 13' wird diese beispielsweise von einem Bediener 11' (oder automatisiert von einem Robotersystem) zu einem nachfolgenden Bearbeitungsschritt gebracht.

Die hierin vorgeschlagene Lösung erfolgt über einen elektronischen Assistenten, der den Bediener 11 informationsseitig mittels situativer Informationsbereitstellung unterstützt. Diese erlaubt es dem Bediener 11 weiterhin individuelle Präferenzen (wie: wo fange ich an, lege ich kleine Handpuffer an oder nicht, ...) bei der Absortierung umzusetzen. Die Lösung folgt dem Grundprinzip: Überwachen, Auswerten und situativ benötigte Informationen bereitstellen.

Um die benötigte Position der entnehmenden Hand erfassen zu können wird im Bereich des Arbeitsplatzes ein Ortungssystem 51 vorgesehen, das die Ortung einer Hand des Bedieners, insbesondere einer Sortierunterstützungseinheit 53, erlaubt. Die Sortierunterstützungseinheit 53 befindet sich nahe der Hand/des Arms des Bedieners 11. In Fig. 1 ist sie beispielhaft an einem Handschuh des Bedieners 11 vorgesehen. Die Sortierunterstützungseinheit 53 ist beispielsweise ein Sender (Radio Frequency Identification, RFID), dessen IST-Position in Echtzeit erkannt werden kann. Peiltranspondersysteme arbeiten z.B. im Bereich von 2,45 GHz mit einer Ortsauflösung von wenigen Zentimetern.

Wie in Fig. 1 gezeigt, weist das Ortungssystem 51 beispielhaft vier Antennen 55 auf, wobei mindestens drei Antennen (zur Genauigkeitserhöhung bevorzugt mehr) ortsnah am Sortiertisch 21 und optional an Werkstücksammelstelleneinheiten (beispielsweise dem mobilen Wagen 39) vorgesehen sind. Über die Antennen 55 erfasste Funkwellen werden als Daten an einen Positionierungsberechnungsabschnitt 57 des Ortungssystem 51 geleitet, der aus den unterschiedlichen Signallaufzeiten die Position der Sortierunterstützungseinheit 53 und optional deren Bewegungstrajektorie bestimmt. Der Positionierungsberechnungsabschnitt 57 des Ortungssystems 51 kann beispielsweise auch als Teil des MES 5 ausgebildet sein.

Mittels der im Positionsdatensatz abgelegten Daten zur Werkstückerzeugung aus der Flachbettmaschine 3 ist die Lage der zur Entnahme anstehenden Teile ebenfalls im selben Koordinatensystem bekannt. Ist nun für eine Werkstücksammelstelleneinheit (Ladungsträger), die sich im Messbereich des Ortungssystem befindet, die Lage und bevorzugt Form und Größe bekannt, kann auch der Ablegevorgang des Absortierens unterstützt werden. Beispielsweise können für den Wagen 39 oder die Brücke 40 die einzelnen jeweils einer Anzeigeeinheit zugeordneten Ablegebereiche (oder Fächer) in ihrer Geometrie und/oder Position im MES hinterlegt sein. D.h., allgemein sind die Lagen der Werkstücksammelstelleneinheiten (beispielsweise des mobilen Wagen 39) sowie der Werkstücksammeleinheiten im System verfügbar.

Die beispielsweise als Cloud ausgebildete MES Datenbank liefert ferner Basisdaten zu den hergestellten Werkstücken und dient als Speicher für die verschiedenen Ortsinformationen.

Ein oder mehrere Sensoren der vom Bediener getragenen Sortierunterstützungseinheit 53 erlauben ferner die Detektion von Gesten, die im MES spezifische Aktionen auslösen. Die Erkennung von spezifischen Gesten kann ferner alternativ oder ergänzend durch eine Umgebungskamera unterstützt werden.

Mit dem zuvor beschriebenen Aufbau werdend u.a. folgende Anwendungen möglich: Es kann Information über Teile im Umfeld der Hand des Bedieners angezeigt werden (Papier-basierte Absortierung entfällt). Die Entnahme eines Werkstücks kann durch Gestensteuerung beim Greifen eines Werkstücks gebucht werden. Ferner kann durch Gestensteuerung bei der Ablage des Werkstücks dieses einer Werkstücksammelstelle zugebucht werden. Die Zubuchung umfasst dabei z.B. die Zuordnung zu einem Ladungsträger und damit das Vermerken welche und wie viele Werkstücke abgelegt werden als auch wohin bestimmte Werkstücke bewegt wurden, z.B. den Ort bei definierten Fächern.

In einer Ausführungsform der Sortierunterstützungseinheit 53 ist ein Arbeitshandschuh mit einem aufsetzbaren Sender-Kit ausgestattet. Bei Abnutzung kann der Arbeitshandschuh ersetzt und das bestehende Sender-Kit auf den neuen Arbeitshandschuh aufgesetzt werden. Über den Handschuh kann der Bediener mit den notwendigen Informationen versorgt werden, indem z.B. über den Handschuh ein Projektor ortskontextsensititv gesteuert wird, der die notwendigen Informationen an der entsprechenden Stelle im Bereich der Hand auf das Blech (die Werkstücke) projiziert. In Fig. 1 ist beispielhaft ein Projektor 15 oberhalb des Sortiertischs 21 angebracht, der dazu ausgebildet ist, Information in einem Bereich nahe der Aktivität des Bedieners (seiner Hand) beispielsweise durch Scannen von Text oder hervorheben von Bereichen/Werkstücken bereitzustellen. Alternativ oder zusätzlich können über eine Anzeigeeinheit auf dem Handschuh die notwendigen Informationen bereitgestellt werden.

Über die Position der Sortierunterstützungseinheit 53 weiß das Ortungssystem 51 über welchem Werkstück 9 sich die Hand, die z.B. den Handschuh anhat oder an der ein anderes Medium zur Positionsbestimmung angebracht ist, befindet. Zusätzlich ist eine Anzeige des aktuell erfassten Teils auf der Anzeigeeinheit mit weiteren Informationen zu dem Werkstück denkbar. Derartige Informationen umfassen z.B. Kundendaten, Informationen zum nachfolgenden Prozessschritt, Anzeige des entsprechenden Ladungsträgers und die Anzahl weiterer gleicher Werkstücke.

In einigen Ausführungsformen wird durch die Greifbewegung das Werkstück als Entnommen gebucht und durch Loslassen dem ebenfalls mit einem Sender ausgestatten Ladungsträger/der Werkstücksammelstelleneinheit (Boxen, Paletten, Kisten mit mehreren Fächern, ...) automatisch zugeordnet. Die Ladungsträger können unabhängig von ihrer Ausprägung mit einem Sender ausgestattet werden. Es besteht also keine Abhängigkeit von spezifischen Ladungsträgern.

Im Ergebnis weiß damit das Ortungssystem/das MES, auf welcher Werkstücksammelstelleneinheit, z.B. in welchem Fach eines Ladungsträgers, sich welches Werkstück in welcher Stückzahl befindet. Entsprechend kann die Anlage im Materialfluss gesteuert werden und/oder spezifische Werkstücke können schnell und einfach lokalisiert werden.

Wie eingangs erwähnt, wurde ein Projektor als Lösung zur Darstellung der Informationen für den Abräumer auf dem Blech vorgeschlagen. Dies ist praktisch schwer umsetzbar, da durch das Strahlungsverhalten von Blech (Spiegel) eine hohe Lichtleistung notwendig ist. Folglich können hier nur Laserprojektoren mit Scannern sinnvoll genutzt werden. Diese können aber nicht den gesamten Sortiertisch auf einmal abdecken. Aus diesem Grund bietet der hier genannte Ansatz der ortskontextsensitiven Projektion eine Lösung: Die Information wird nur auf die Teile in der Nähe des Bedieners/der Bedienerhand projiziert. Diese ortskontextsensitive Projektion ist leichter umsetzbar und mit aktuell verfügbaren technischen Systemen wirtschaftlich machbar.

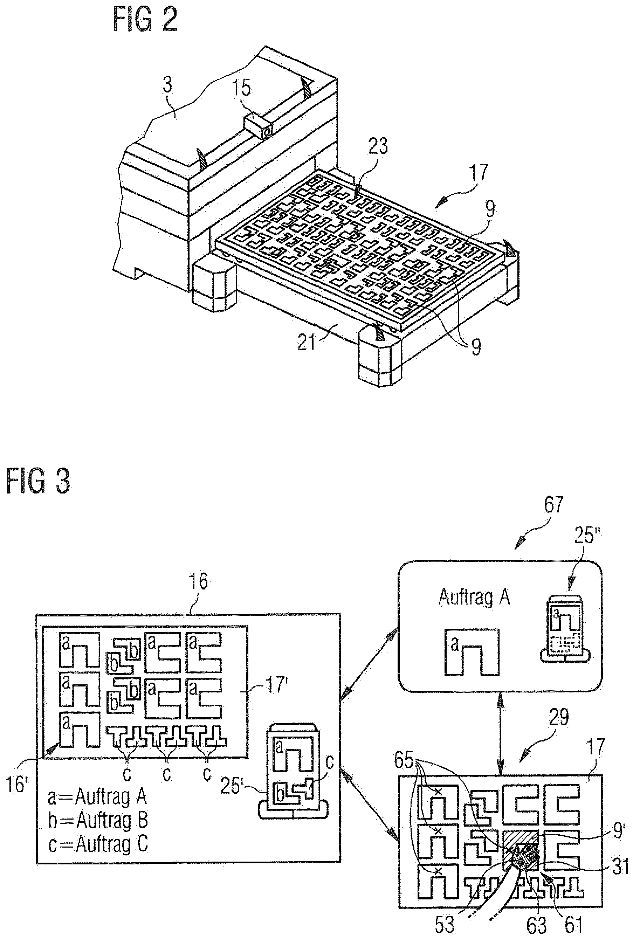

Figur 2 zeigt beispielhaft eine Anordnung von Werkstücken 9 einer bearbeiteten Tafel, wie diese nach der Produktion mit einer Flachbettmaschine auf einem Sortiertisch vorliegen kann. Um das Entnehmen von Werkstücken erkennen zu können, erfasst das Ortungssystem 51 die Position der Sortierunterstützungseinheit 53 im überwachten Arbeitsraum 23, der sich über der bearbeiteten und abzusortierenden Tafel erstreckt. Die Absortierung erfolgt durch den Bediener 11, im Ausführungsbeispiel der Fig. 1 in Gestalt eines lebenden Menschen gezeigt, also keinen Roboter. Um die Position der Sortierunterstützungseinheit 53 und damit der Hand über dem z.B. geschnittenen Blech auf der Palette bestimmen zu können, ist das Ortungssystem 51 auf die Maschinenkoordinaten kalibriert.

Auf der Steuerungseinheit 8 mit Schnittstelle zum Ortungssystem 51 und zur Flachbettmaschine 3 wird mit geeigneten Verfahren des Positionsabgleichs (z.B. einer Differenzbildung bezüglich des Flächenschwerpunkts eines Werkstücks) erkannt, welches Werkstück 9 sich in der Nähe der Hand befindet und vom Sortiertisch 21 entnommen wird. Die Lagen der abzusortierenden Werkstücke 9 ergeben sich aus dem zugrundeliegenden Bearbeitungsplan.

Fig. 3 zeigt schematisch einen Bearbeitungsplan 16 mit einer beispielhaften Visualisierung eines Positionsdatensatzes 16', der der Anordnung von Werkstücken 9 auf dem Sortiertisch 21 zugrunde lag. Man erkennt beispielhaft geplante Formteile in drei Typen a, b, c auf einer schematisch reproduzierten Tafel 17', die drei Aufträgen A, B, C zugeordnet sind. Ferner erkennt man, dass die erzeugten Formteile nach den Typen a, b, c auf einem Wagensymbol 25' als Werkstücksammelstelleneinheiten beispielhaft in drei Stapel sortiert werden sollen.

Fig. 3 zeigt ferner schematisch eine Absortiervorgang 29 und ein beispielhaftes Anzeigen von Information für den Bediener auf einem Display 67.

Der schematisch dargestellte Absortiervorgang 29 zeigt eine Hand 61, die einen Handschuh 63 trägt, an dem die Sortierunterstützungseinheit 53, die einen Sender umfasst, angebracht ist. Die Position der Sortierunterstützungseinheit 53 über der Tafel 17 mit den daraus ausgeschnittenen Werkstücken 9 wird bestimmt und mit den Flächenschwerpunkten 65 der Werkstücke 9 abgeglichen. Beispielsweise erfolgt eine Abstandsermittlung durch das geometrische Mittel. In Figur 3 ist ein Werkstück 9' schraffiert dargestellt, das das der Position der Sortierunterstützungseinheit 53 zugeordnete Werkstück darstellt, das in diesem Fall am nächsten, hier unter der Hand 61 des Bedieners, liegt.

In Fig. 3 wird zu diesem Werkstück 9' Auftragsinformation (hier Text "Auftrag A" auf dem Display 67 angezeigt. Beispielsweise kann ferner zur visuellen Prüfung durch den Bediener die Form des Werkstücks 9' angezeigt werden. Des Weiteren kann z.B. eine zugehörige Werkstücksammelstelleneinheit bzw. Information zum Ablegevorgang angezeigt werden. Wie in Fig. 3 angedeutet, kann beispielsweise Information zur genauen Ablegestelle des Werkstücks auf einem zugehörigen Wagen anhand eines Wagensymbols 25" angezeigt werden.

Über eine ständige Aktualisierung der Anzeige kann der Bediener in seiner Auswahl des als nächstes abzusortierenden Werkstücks und hinsichtlich des Ablegevorgangs unterstützt werden.

Das Display 67 kann z.B. im Umfeld des Palettenwechslers der Flachbettmaschine vorgesehen sein. Alternativ kann eine Projektion von Information mithilfe des Projektors 15 (z.B. Laserprojektor) erfolgen. Ferner kann die Anzeige auf einer Datenbrille realisiert werden. Über derartige "Augmented-Reality"-Brillen kann neben der Anzeige des ortsfixen korrekten Ablageortes auch dessen Sollhöhe exakt angezeigt werden. Beispielsweise kann eine "Hololens"-Datenbrille die Anzeige von ortsfixen holografischen 3D-Objekten ermöglichen. Der Bediener 11 kann damit sehr einfach kontrollieren, ob ein Stapel von Werkstücken komplett ist.

In Fig. 3 stellen die Doppelpfeile die Verarbeitung der Information aus dem Bearbeitungsbilddatensatz 16' und der Positionsinformation der Sortierunterstützungseinheit 53 im MES 5 dar.

Es sei ergänzt, dass das MES 5 zusätzlich bewirken kann, dass nach dem Erfassen des Entnahmevorgangs die Anzeigeeinheit der zuständigen Werkstücksammelstelleneinheit Signale ausgibt, die den Ablegevorgang vereinfachen.

Um dem Bediener 11 mitteilen zu können, was mit dem entnommenen Teil als nächstes passieren soll (klassischerweise wird es zum Weitertransport in eine Kiste, die als Werkstücksammelstelleneinheit 13 dient, gelegt), hat die Steuerungseinheit 8 Zugriff auf das MES 5. Dort sind nicht nur der nächste Ablegeort (in welche Kiste muss das Teil gelegt werden), sondern auch weitere Informationen wie z.B. Material, Auftragsnummer, Kunde usw. hinterlegt.

Die Werkstücksammelstelleneinheiten 13 besitzen ebenfalls eine Kommunikationsschnittstelle zur Steuerungseinheit 8 und können Informationen zum Auftrag z.B. über ein E-Ink-Display ausgeben. Über die Schnittstelle sind die Werkstücksammelstelleneinheiten 13 damit außerdem in der Lage, dem Bediener 11 bei Aufnahme eines Werkstücks 9 anzuzeigen, in welche Kiste er es ablegen soll. Über eine eingebaute Waage oder eine andere geeignete Sensoreinheit kann festgestellt werden, ob der Bediener 11 das Werkstück 9 in die richtige Kiste abgelegt hat. Entsprechend kann ein Feedback, z.B. über einen Zähler auf dem E-Ink-Display gesendet werden. Somit kann in der Steuerungseinheit 8 abgeglichen werden, ob alle Teile korrekt absortiert wurden oder ob Teile des Auftrags fehlen, die zum Beispiel durch das Restgitter gefallen sind.

Denkbar ist auch der Fall, dass der Bediener 11 beim Absortieren ein fehlerhaft produziertes Teil erkennt und dieses in eine für Ausschuss bereitstehende Sammelstelle ablegt. In einem weiteren Fall zeichnet die Flachbettmaschine 3 während der Tafel-Produktion automatisch Fehlschnitte, manuelle Bedienereingriffe oder gar Kollisionen auf und verbucht über die Schnittstelle zur Steuerungseinheit 8 betroffene Teile als Ausschuss. So kann dem Bediener vor dem Aufgreifen des beschädigten Werkstücks angezeigt werden, dass dieses nicht absortiert oder als Ausschuss abgelegt werden soll. Für derartige und insbesondere alle beschriebenen Fälle kann automatisch ein Auftrag zur Nachproduktion der identifizierten Ausschussteile im MES 5 erstellt und eingeplant werden.

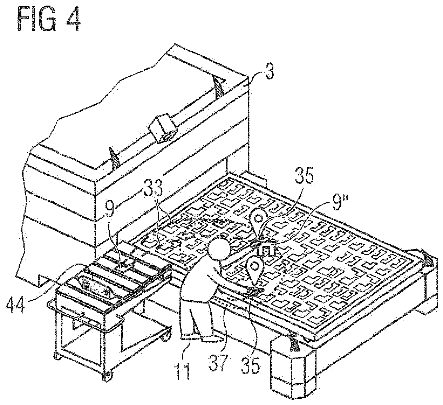

Wie in Fig. 4 verdeutlicht wird, erlaubt es das Ortungssystem 51 ferner die Bewegung der Hand zu analysieren, sei es um z.B. Gesten zu erkennen oder allgemein Bewegungstrajektorien auszuwerten. So kann durch Tracking der Hand des Bedieners 11 festgestellt werden, ob die Werkstücke in die richtigen Kisten abgelegt wurden. Beispielhaft sind in Fig. 4 Bewegungstrajektorien 33 der Hand beim Entnehmen eines Werkstücks 9 gezeigt.

Ferner kann durch die Tracking-Information das Verfahren zur Erkennung eines entnommenen Teils verbessert werden. Durch die Lokalisierung der Hand (z.B. Positionen 35), deren Bewegungstrajektorie oder Bewegungsteiltrajektorie wird eine interessierende Region 37 ("region of interest") im Bildbereich definiert. Die zuvor angesprochene Projektion von Information kann auf diesen Bereich beschränkt werden. Die Projektion muss damit nicht in jedem Rechenschritt den gesamten Arbeitsraum 23 abdecken, sondern lediglich die interessierende Region 37 um die Hand des Bedieners 11. Arbeiten mehrere Bediener 11 beim Absortiervorgang, kann gleichzeitig am Sortiertisch 21 für jeden Bediener 11 eine interessierende Region definiert werden. Jedem Bediener 11 können damit individuelle Informationen zum korrekten Ablageort des Werkstücks übermittelt werden.

Neben dem zuvor explizit angesprochenen Ansatz, die Logik und Rechenleistung in einem zentralen Rechenknoten (Steuerungseinheit) auszuführen, sind andere bekannte Topologien zur Vernetzung von Flachbettmaschine 3, Ortungssystemen, Projektor, optional einem bildgebenden System, Kisten mit Werkstücksammelstellen und MES 5 einsetzbar.

Dem Bediener 11 kann ferner über die Projektionsfläche z.B. am Datenhandschuh oder an der Datenbrille anhand der vorhandenen Informationen eine optimale Absortierstrategie vorgeschlagen werden, auch wenn er trotzdem nach einer selbst gewählten Strategie absortieren kann. Bei vielen Kleinteilen kann dem Bediener 11 z.B. vorgeschlagen werden, gleich mehrere gleiche Teile zu entnehmen. Durch einen Algorithmus kann begleitend in Echtzeit berechnet und angezeigt werden - z.B. abhängig von Ausdehnung und Gewicht der einzelnen Teile - wie viele Teile auf einmal entnommen werden können. Dies kann ferner je nach Bediener individuell anpassbar sein. Ferner kann dem Bediener 11, falls er ein Formteil des Typs a aufgenommen hat, die Lage weiterer Teile des gleichen Typs, beispielsweise entlang einer günstigen Bewegungstrajektorie, angezeigt werden. Dies kann beispielsweise mit dem Projektor 15 erfolgen. Dadurch können z.B. unnötige Wege vermieden werden.

Nachdem ein entnommenes Teil erfolgreich eingelesen wurde, gibt die Steuerungseinheit 8 als Leitsystem, z.B. über die Projektionsfläche am Datenhandschuh oder an der Datenbrille den korrekten Ablageort an den Bediener 11 aus. Dies kann z.B. ein nummeriertes Lagerfach sein. Sollte das Lagerfach an einer weiter entfernten Position sein, kann über die Projektionsfläche der Datenbrille auf einen Lageplan auf den Ablagebereich verwiesen werden. Die unterstützende Kamera der Datenbrille kann ferner das Lagerfach erkennen, sobald es sich innerhalb des sichtbaren Bereiches befindet, und markiert es auf der Projektionsfläche.

Das Leitsystem überwacht ferner mithilfe des Ortungssystems während des Ablegens, ob das Teil in das richtige Fach gelegt wurde, und gibt entsprechend eine Rückmeldung an den Bediener 11.

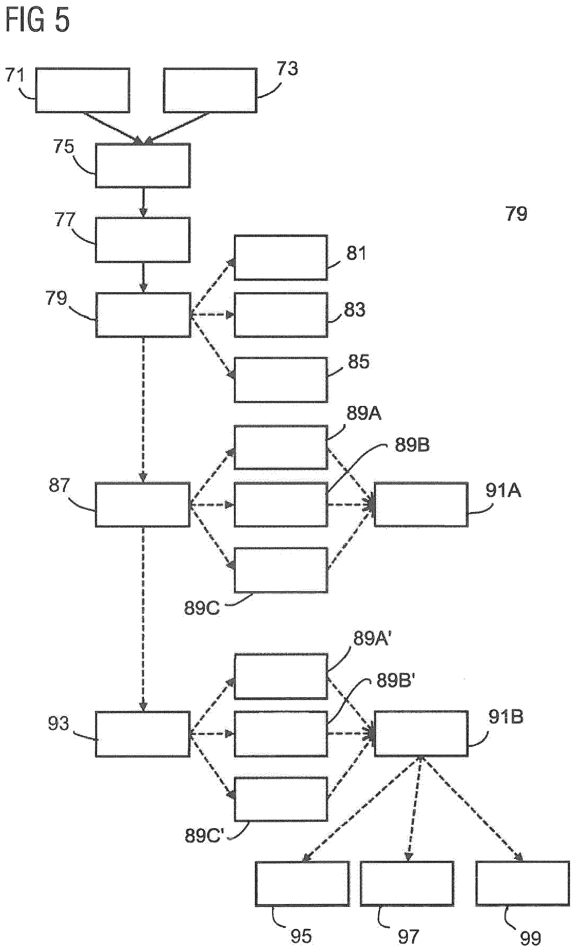

Zusammenfassend zeigt Fig. 5 ein Flussdiagramm zur Verdeutlichung eines beispielhaften Verfahrensablaufs bei der Unterstützung eines Absortiervorgangs. Dabei wird davon ausgegangen, dass auf einem Sortiertisch Werkstücke angeordnet sind, die mit einer Flachbettwerkzeugmaschine, insbesondere einer wie zuvor beschriebenen Laserschneid- oder Stanz-Flachbettwerkzeugmaschine, basierend auf einem Bearbeitungsplan erzeugt wurden.

In der Steuerungseinheit 8 wird ein Positionsdatensatz des Bearbeitungsplans (siehe z.B. den Positionsdatensatz 16' in Fig. 3) bereitgestellt (Schritt 71), der der Anordnung der erzeugten Werkstücke zugrunde lag. Ferner wird im Bereich des Sortiertischs die Bewegung einer nahe einer Hand des Bedieners getragenen Sortierunterstützungseinheit mit einem Ortungssystem überwacht. Dabei wird kontinuierlich eine Position der Sortierunterstützungseinheit mit dem Ortungssystem erfasst (Schritt 73). Ferner wird die Position der Sortierunterstützungseinheit mit den Positionen des Positionsdatensatzes abgeglichen (Schritt 75). Der Abgleich kann z.B. bezüglich eines Flächenschwerpunkts der ausgeschnittenen Blechstücke erfolgen. Mindestens ein der Position der Sortierunterstützungseinheit zugeordnetes Werkstück wird so identifiziert (Schritt 77). Beispielsweise werden das oder die der Sortierunterstützungseinheit am nächsten gelegenen Werkstücke identifiziert. Für die weitere Nutzung zur Unterstützung des Absortiervorgangs wird dann ein Sortiersignal erzeugt (Schritt 79), das Information über das der Position der Sortierunterstützungseinheit zugeordnete Werkstück umfasst.

Das Sortiersignal kann der Steuerungseinheit 8 und/oder dem MES 5 übermittelt werden und nachgeordnete Prozesse auslösen. So kann das Sortiersignal verschiedenste Aufgaben erfüllen und Aktionen auslösen. So kann das MES bewirken, dass die Information dem Bediener angezeigt wird (Schritt 81). Z.B. kann der Type, die Lage und/oder die Form des Werkstücks und/oder Informationen zum zugehörigen Bearbeitungsauftrag wie Auftragsnummer, Ablegeort oder nächsten Bearbeitungsschritt angezeigt werden. Es kann ferner angeben, ob und wie mit dem mindestens einen entnommenen Werkstück weiter zu verfahren ist.

Ferner kann auf ein oder mehrere identifizierte Werkstücke eine Lichtprojektion gerichtet werden (Schritt 83), die z.B. ein bevorzugtes Werkstück kenntlich macht oder auf das oder diese Werkstücke entsprechende Informationen abbildet.

Des Weiteren kann eine Werkstücksammelstelle kenntlich gemacht werden, die dem oder den identifizierten Werkstücken zugeordnet ist (Schritt 85). Beispielsweise kann ein Blinksignal initiiert werden oder auf einer Anzeige der Werkstücksammelstelleneinheit zugehörige Information angezeigt werden. So kann ein Ablegesignal in Abhängigkeit des Sortiersignals zur Unterstützung der Zuordnung des entnommenen Werkstücks durch einen Bediener zu einem nachfolgenden Bearbeitungsschritt ausgegeben werden. Z.B. wird ein auftragsgemäßes Ablegen des entnommenen Werkstücks an einer dem Auftrag entsprechenden Werkstücksammelstelle angeregt. Dies kann beispielsweise ein Blinken einer zugehörigen Kiste, ein spezielles Signal/spezielle Information auf einer der Kiste zugeordneten Anzeige und/oder ein Einblenden einer Markierung der zugehörigen Kiste in ein Display einer Datenbrille umfassen.

Es folgt eine Entnahme mindestens eines Werkstücks vom Sortiertisch (Schritt 87), wobei die zugehörige Bewegung der Sortierunterstützungseinheit vom Ortungssystem erfasst (Schritt 89A) und als Entnahmevorgang verbucht werden kann (Schritt 91A). Alternativ kann der Bediener über zusätzliche Gestenbewegungen, die wiederum vom Ortungssystem erfasst werden (Schritt 89B), oder durch Verwenden externer Eingabemittel (z.B. per Fußschalter) (Schritt 89C) ein Verbuchen der Entnahme (Schritt 91A) bewirken.

Ferner kann dem MES Information zum Ablegen eines entnommenen Werkstücks (Schritt 93) z.B. durch Bewegungserfassen (Schritt 89A'), Gestenerfassen (Schritt 89B') oder durch Verwenden externer Eingabemittel (Schritt 89C') bereitgestellt werden, so dass nach Abschluss des Ablegevorgangs dieser als erfolgter Ablegevorgang verbucht werden kann (Schritt 91B). Das Erfassen des Ablegevorgangs kann zusätzlich eine Gewichtsüberwachung einer spezifischen Werkstücksammelstelle und/oder ein Überwachen einer Bewegungstrajektorie oder Bewegungsteiltrajektorie des entnommenen Werkstücks oder eines die Bewegung bewirkenden Objekts (Hand) umfassen (siehe z.B. Fig. 4).

Wenn der Ablegevorgang einem dem Sortiersignal zugeordneten Ablegevorgang entspricht, kann ein Sortiervorgangvollendungssignal ausgegeben werden (Schritt 95), beispielsweise wieder durch ein Blinksignal, spezielle Ausgaben auf einer Anzeige z.B. der Werkstücksammelstelleneinheit und/oder eine Markierung im Datenbrillendisplay. So kann z.B. eine Werkstücksammelstellen-spezifische Anzeige bzgl. der Ablage des entnommenen Werkstücks aktualisiert werden.

Sollte der Ablegevorgang von einem dem Sortiersignal zugeordneten Ablegevorgang abweichen, kann ein Fehlersignal ausgegeben werden (Schritt 97), beispielsweise wieder durch ein Blinksignal an der Werkstücksammelstelleneinheit, spezielle Ausgaben auf einer Anzeige an der Werkstücksammelstelleneinheit und/oder eine Markierung im Datenbrillendisplay. Begleitend kann Information bezüglich des dem Sortiersignal zugeordneten richtigen Ablegevorgangs wiederholt dargestellt werden.

Ferner kann z.B. überwacht werden, ob bei einem Ablegevorgang mindestens ein entnommenes Werkstück in einer Ausschusssammelstelle durch einen Bediener abgelegt wurde (Schritt 99). Das entnommene Werkstück kann vom MES 5 als Ausschussstück vermerkt werden, z.B. optional in eine Fehlteileliste aufgenommen werden.

Für erkannte Ausschussteile kann ein Ergänzungsproduktionssignal an ein Produktionsleitsystem ausgegeben werden. Dort werden z.B. Produktionsparameter des entnommenen Werkstücks mit einem nachfolgenden Bearbeitungsplan abgeglichen. Bei Übereinstimmung der Produktionsparameter mit dem nachfolgenden Bearbeitungsplan und einer Verfügbarkeit einer erneuten Erzeugung des entnommenen Werkstücks, kann der nachfolgende Bearbeitungsplan mit einem Erzeugungsschritt zur Erzeugung eines Ersatzwerkstücks für das Ausschussstück ergänzt werden. Die Erzeugung eines Ersatzwerkstücks kann auch in späteren, nachfolgenden Bearbeitungsplänen vorgesehen werden.

Die in Fig. 5 gezeigten Schritte des Verfahrens können wiederholt erfolgen, um eine kontinuierliche Echtzeit-Überwachung und Unterstützung des Absortiervorgangs zu gewährleisten.

Bezugnehmend auf Fig. 1 kann bei den zuvor beispielhaft erläuterten Schritten die Kommunikation auf einer datentechnischen Verbindung des Ortungssystems, der Werkstücksammeleinheiten (insbesondere deren Anzeigeeinheiten und deren Signalvorrichtungen), mit der Steuerungseinheit 8 der Werkzeugmaschine 3 und damit dem MES 5 basieren. Der Datenaustausch kann allgemein per Datenkabel mit üblichen Datenverbindungen, z.B. CAN, Profibus, RS232, RS485, USB, LAN etc., erfolgen. Er kann aber insbesondere auch per Infrarot oder Funk (WLAN, WiFi, etc.) erfolgen. Wie beispielhaft in Fig. 1 gezeigt ist, sind die Werkstücksammelstelleneinheiten 13 mit einem eigenen Datenversorgungssystem 14 kabellos mit dem MES 5 und der Steuerungseinheit 8 zum Datenaustausch verbunden.

Die Kommunikation erlaubt ferner, dass einem Bediener direkt am Handschuh, auf lokalen Monitoren und/oder an den Werkstücksammelstelleneinheiten Information bereitgestellt werden kann, die z.B. dem MES 5 vorliegt. Zum einen umfasst die bereitstellbare Information Werkstück-spezifische Information (hierin auch als Werkstückinformation bezeichnet), die sich auf den Herstellungsprozess und die damit verbundenen Daten der Werkstücke bezieht, die in der Werkstücksammelstelleneinheit abgelegt werden. Zum anderen umfasst die bereitstellbare Information zur Werkstücksammelstelleneinheit selbst, insbesondere deren Beladung, Position etc., die beispielsweise optisch und/oder akustisch über die Signalvorrichtung mitgeteilt werden kann.

Kann bei z.B. kleinen erzeugten Werkstücken ein spezifisches Werkstück mangels Ortsauflösung der Position der Hand des Bedieners nicht zugeordnet werden, kann eine Zuordnung von mehreren Werkstücken durchgeführt werden. Soll bevorzugt ein Werkstück aufgelöst, d.h. Information zu einem Werkstück bereitgestellt werden, kann die benötigte Auflösung über andere Erfassungsarten wie Kamera oder Waage unterstützend erfolgen. Ferner kann dem Bediener (z.B. reduzierte) Information für die Mehrzahl von Werkstücken angezeigt werden und es kann ihm optional ein Auswählen aus der Mehrzahl von Werkstücken durch eine Eingabe ermöglicht werden.

Die offenbarte Flachbettwerkzeugmaschine 3, das Absortiersystem und/oder das Verfahren können insbesondere auch für Werkstücke 9 und/oder Formteile a, b, c mit mehr als vier Ecken und/oder mehr als vier Kanten verwendet werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zur Unterstützung eines Bedieners (11) bei einem Absortiervorgang von auf einem Sortiertisch (21) angeordneten Werkstücken (9), die mit einer Flachbettwerkzeugmaschine, insbesondere einer Laserschneid- oder Stanz-Flachbettwerkzeugmaschine (3), gemäß einem Bearbeitungsplan (16) erzeugt wurden, unter Verwendung eines Ortungssystems (51) zur Bestimmung einer Position einer Hand eines Bedieners im Raum, mit den Schritten in der Abfolge:
Bereitstellen (Schritt 71) eines Positionsdatensatzes (16') des Bearbeitungsplans (16), der die Positionen der mit dem Bearbeitungsplan (16) erzeugten Werkstücke (9) auf dem Sortiertisch (21) umfasst,
Erfassen (Schritt 73) einer Position der Hand des Bedieners mit dem Ortungssystem (51),
Abgleichen (Schritt 75) der Position der der Hand des Bedieners mit den Positionen des Positionsdatensatzes (16'),
Identifizieren (Schritt 77) mindestens eines Werkstücks (9') durch dessen Positionsdatensatz, das durch seinen Positionsdatensatz der Position der Hand des Bedieners zugeordnet ist, und
Ausgeben (Schritt 79) eines Sortiersignals, das Information über das mindestens eine der Position der Hand des Bedieners zugeordnete Werkstück (9') umfasst.

2. Verfahren nach Anspruch 1, wobei das der Hand des Bedieners am nächsten gelegene Werkstück als das mindestens eine der Position der Hand des Bedieners zugeordnete Werkstück (9') identifiziert wird und/oder
wobei mehrere der Hand des Bedieners am nächsten gelegene Werkstücke als der Position der Hand des Bedieners zugeordnete Werkstücke (9') identifiziert werden und/oder
wobei das in einer Bewegungsrichtung der Hand des Bedieners am nächsten gelegene Werkstück als das mindestens eine der Position der Hand des Bedieners zugeordnete Werkstück (9') identifiziert wird.

3. Verfahren nach Anspruch 1 oder 2, wobei der Hand des Bedieners eine Sortierunterstützungs-spezifische Anzeigeeinheit (19) zugeordnet ist, auf der die Information über das mindestens eine der Position der Hand des Bedieners zugeordnete Werkstück (9') angezeigt wird.

4. Verfahren nach einem der Ansprüche 1 bis 3, ferner mit
basierend auf dem Sortiersignal, Bereitstellen von ortskontextsensitiver Information (Schritt 81), die als werkstückspezifische Information beispielsweise Kundendaten, Informationen zum nachfolgenden Prozessschritt, Anzahl weiterer gleicher Teile, zugeordnete Werkstücksammelstelle oder Auftragsnummer für das mindestens eine der Position der Hand des Bedieners zugeordnete Werkstück (9') umfasst, und
optional ferner mit
Projizieren (Schritt 83) der ortskontextsensitiven Information auf das mindestens eine der Position der Hand des Bedieners zugeordnete Werkstück (9'),
wobei optional ein bevorzugt abzusortierendes Werkstück optisch markiert wird oder die Information über das mindestens eine der Position der Hand des Bedieners zugeordnete Werkstück (9'), insbesondere die ortskontextsensitive Information, optisch dem/den Werkstück(en) als Schriftzug überlagert und/oder auf einer Sortierunterstützungs-spezifischen Anzeigeeinheit (19), insbesondere einer Werkstücksammelstellen-spezifischen Anzeigeneinheit (43), einer Datenbrille des Bedieners (11) oder einem Überwachungsmonitor, angezeigt wird und/oder als Blinksignal ausgegeben wird.

5. Verfahren nach einem der vorhergehenden Ansprüche, ferner mit
Erkennen und Verbuchen (Schritt 91A) eines Entnahmevorgangs, optional durch Bestimmen einer Bewegungstrajektorie (33) der Hand des Bedieners durch Auswerten der Positionsdaten der Hand des Bedieners und Erkennen einer Entnahmebewegung in einem Abschnitt der Bewegungstrajektorie (Schritt 89A) und/oder durch Erkennen einer Gestenbewegung (Schritt 89B) mittels der Bewegungstrajektorie (33) der Hand des Bedieners, wodurch ein entnommenes Werkstück (9") identifiziert wird, und
optional Ausgeben (Schritt 85) eines Ablegesignals zum systemunterstützen Ablegen des entnommenen Werkstücks (9") an einer für das entnommene Werkstück (9") vorgesehenen Werkstücksammelstelleneinheit (13).

6. Verfahren nach einem der vorhergehenden Ansprüche, ferner mit
Erkennen und Verbuchen (Schritt 91B) eines von einem Bediener (11) durchgeführten Ablegevorgangs des entnommenen Werkstücks (9), optional durch Bestimmen einer Bewegungstrajektorie der Hand des Bedieners nach dem Entnehmen des Werkstücks (9") durch Auswerten der Positionsdaten der Hand des Bedieners und Erkennen einer Ablegebewegung (Schritt 89A') in einem Abschnitt der Bewegungstrajektorie und/oder durch Erkennen einer Gestenbewegung (Schritt 89B') mittels der Bewegungstrajektorie (33) der Hand des Bedieners.

7. Verfahren nach Anspruch 5 oder 6, ferner mit
Bereitstellen einer Zuordnung von Gesten und Prozessen,
Bestimmen einer Bewegungstrajektorie der Hand des Bedieners durch Auswerten der Positionsdaten der Hand des Bedieners,
Erkennen einer Geste in einem Abschnitt der Bewegungstrajektorie, und
Durchführen eines der Geste zugeordneten Prozesses, wie ein Verbuchen eines Entnahmevorgangs oder ein Verbuchen eines Ablegevorgangs.

8. Verfahren nach Anspruch 7, ferner mit
Ausgeben (Schritt 95) eines Sortiervorgangvollendungssignals, wenn der Ablegevorgang einem dem entnommenen Werkstück (9") zugeordneten Ablegevorgang entspricht, oder
Ausgeben (Schritt 97) eines Fehlersignals, wenn der Ablegevorgang von einem dem entnommenen Werkstück (9") zugeordneten Ablegevorgang abweicht, oder Überwachen (Schritt 99) eines Ablegevorgangs mindestens eines entnommenen Werkstücks (9") in einer Ausschusssammelstelle, und
Zuordnen des mindestens einen entnommenen Werkstücks (9") als Ausschussstück und optional Aufnehmen des Ausschussstücks in eine Fehlteilliste und
ferner optional Ausgeben eines Ergänzungsproduktionssignals an ein Produktionsleitsystem (5), Abgleichen von Produktionsparametern des entnommenen Werkstücks (9") mit einem nachfolgenden Bearbeitungsplan und, bei Übereinstimmung der Produktionsparameter mit dem nachfolgenden Bearbeitungsplan und einer Verfügbarkeit bezüglich des entnommenen Werkstücks (9"), Ergänzen des nachfolgenden Bearbeitungsplans mit einem Erzeugungsschritt zur Erzeugung eines Ersatzwerkstücks für das Ausschussstück.

9. Verfahren nach einem der vorhergehenden Ansprüche, wobei der Bediener eine Sortierunterstützungseinheit (53) nahe seiner Hand trägt, und die Position der Hand durch Ortung der Position der Sortierunterstützungseinheit (53) bestimmt wird,
wobei insbesondere für die Auswertung die Position der Hand mit der Position der Sortierunterstützungseinheit (53) gleichgesetzt wird, und
wobei die Sortierunterstützungseinheit (53) optional einen aktiven Sender und/oder einen passiven Sender aufweist, dessen Position vom Ortungssystem (51) erfasst wird.

10. Verfahren nach einem der vorhergehenden Ansprüche, wobei die Position der Hand durch eine bildunterstütze Ortung der Hand mit dem Ortungssystem (51) bestimmt wird, und wobei das Ortungssystem (51) insbesondere Bilddaten von einer oder von mehreren Kameras auswertet.

11. Flachbettwerkzeugmaschine, insbesondere Laserschneid- oder Stanz-Flachbettwerkzeugmaschine (3), mit
einer Bearbeitungseinheit, insbesondere einer Laserschneid- oder Stanz-Bearbeitungseinheit,
einer Steuerungseinheit (8), in der ein Bearbeitungsplan (16) abgelegt ist, zur Ansteuerung der Bearbeitungseinheit zur Erzeugung von räumlich gemäß einem Bearbeitungsbilddatensatz (16') nebeneinander angeordneten Werkstücken (9),
einem Sortiertisch (21) zum Bereitstellen der angeordneten Werkstücke (9) zum Absortieren nach erfolgter Herstellung und
einem Ortungssystem (51) zur Bestimmung der Position einer Hand eines Bedieners im Raum,
wobei die Steuerungseinheit (8) zum Durchführen des Verfahrens nach einem der vorhergehenden Ansprüche ausgebildet ist.

12. Flachbettwerkzeugmaschine (3) nach Anspruch 11, ferner mit
mindestens einer bewegbaren Werkstücksammelstelleneinheit (13), optional einer Ausschusssammelstelle, und
wobei das Ortungssystem (51) ein System zum Erfassen und Überwachen von Bewegungen eines Absortier- und Ablegevorgangs ist, insbesondere zur Überwachung einer Bewegungstrajektorie (33) oder Bewegungsteiltrajektorie, die einem entnommenen Werkstück (9") oder einem die Bewegung bewirkenden Objekt zugeordnet sind, und
die Steuerungseinheit (8) dazu ausgebildet ist, die Positionsdaten und optional Gesten auszuwerten, um ortskontextsensitive Information zur Umgebung der Hand des Bedieners in den Absortiervorgang einzubinden, insbesondere anzuzeigen, und optional über Gesten Parameter des Ablegevorgangs anzusteuern, insbesondere Entnahmevorgänge oder Ablegevorgänge zu verbuchen.

13. Flachbettwerkzeugmaschine (3) nach Anspruch 11 oder 12, ferner mit einer nahe der Hand des Bedieners getragenen Sortierunterstützungseinheit (53), die zur Ortung der Position der Sortierunterstützungseinheit (53) mit dem Ortungssystem (51) ausgebildet ist,
wobei die Sortierunterstützungseinheit (53) optional einen aktiven Sender und/oder einen passiven Sender aufweist, dessen Position vom Ortungssystem (51) erfasst wird, und das Ortungssystem (51) mindestens eine Antenne (55) zum Empfangen von Signalen der Sortierunterstützungseinheit (53) aufweist.

14. Flachbettwerkzeugmaschine (3) nach einem der Ansprüche 11 bis 13, wobei das Ortungssystem (5) ferner eine oder mehrere Kameras zur Bilderfassung der Position der Hand des Bedieners aufweist, und/oder
wobei das Ortungssystem (51) ferner eine Auswerteeinheit (57) zur Bestimmung der Position der Hand des Bedieners anhand der Position der Sortierunterstützungseinheit (53) aus den Antennensignalen und/oder aus den erfassten Bilddaten insbesondere zur Auswertung von Bewegungstrajektorien zugeordneten Gesten aufweist und/oder
wobei der Sortiertisch (51) Teil eines Palettenwechslers einer Flachbettwerkzeugmaschine ist.

15. Flachbettwerkzeugmaschine (3) nach einem der Ansprüche 11 bis 14, ferner mit
einer Projektionseinheit (15) zum Projizieren von ortskontextsensitiver Information, die als werkstückspezifische Information beispielsweise Kundendaten, Informationen zum nachfolgenden Prozessschritt, Anzahl weiterer gleicher Teile, zugeordnete Werkstücksammelstelle oder Auftragsnummer für das mindestens eine der Position der Hand des Bedieners zugeordnete Werkstück umfasst, auf das mindestens eine der Position der Hand des Bedieners zugeordnete Werkstück (9').

## Claims

1. A method for supporting an operator (11) at a sorting operation of workpieces (9), which are arranged on a sorting table (21) and which have been produced according to a processing plan (16) using a flatbed machine tool, in particular a laser cutting or punching flatbed machine tool (3), with the use of a localizing system (51) for positioning a hand of an operator in space, the method comprising the steps in the sequence:
providing (step 71) a position data set (16') of the processing plan (16) that includes the positions of the workpieces (9) on the sorting table (21) produced according to the processing plan (16);
detecting (step 73) a position of the hand of the operator with the localizing system (51);
comparing (step 75) the position of the hand of the operator with the positions of the position data set (16');
identifying (step 77) at least on workpiece (9') by its position data set, which is associated by its position data set to the position of the hand of the operator; and
outputting (step 79) a sorting signal that includes information about the at least one workpiece (9'), which is associated to the position of the hand of the operator.

2. The method of claim 1, wherein the workpiece closest to the hand of the operator is identified as the at least one workpiece (9') associated with the position of the hand of the operator; and/or
wherein a plurality of workpieces closest to the hand of the operator are identified as workpieces (9') associated with the position of the hand of the operator; and/or
wherein the workpiece closest in a direction of movement of the hand of the operator is identified as the at least one workpiece (9') associated with the position of the hand of the operator.

3. The method of claim 1 or 2, wherein a sorting support specific display unit (19) is associated with the hand of the operator, on which display unit the information about the at least one workpiece (9') associated with the position of the hand of the operator is displayed.

4. The method of any one of claims 1 to 3, further comprising:
based on the sorting signal, providing location context sensitive information (step 81) that includes as workpiece specific information, for example, customer data, information on a subsequent process step, a number of further identical parts, an assigned workpiece collecting point or an order number for the at least one workpiece (9') associated with the position of the hand of the operator, and
optionally further comprising:
projecting (step 83) the location context sensitive information onto the at least one workpiece (9') associated with the position of the hand of the operator,
wherein optionally a workpiece to be preferentially sorted is optically marked or the information about the at least one workpiece (9') associated with the position of the hand of the operator, in particular the location context sensitive information, is optically superimposed on the workpiece(s) as a text and/or is displayed on a sorting support specific display unit (19), in particular a workpiece collecting point specific display unit (43), data glasses of the operator (11) or a monitoring monitor, and/or is output as a flashing signal.

5. The method of any one of the preceding claims, further comprising:
detecting and booking (step 91A) of a removal operation, optionally by determining a movement trajectory (33) of the hand of the operator by evaluating the position data of the hand of the operator and detecting a removal movement in a section of the movement trajectory (step 89A) and/or by detecting a gesture movement (step 89B) with the movement trajectory (33) of the hand of the operator, whereby a removed workpiece (9") is identified; and
optionally outputting (step 85) a placing signal for system-supported placing of the removed workpiece (9") at a workpiece collecting point unit (13) provided for the removed workpiece (9").

6. The method of any one of the preceding claims, further comprising:
recognizing and booking (step 91B) a placing operation of the removed workpiece (9) performed by an operator (11), optionally by determining a movement trajectory of the hand of the operator after the removal of the workpiece (9") by evaluating the position data of the hand of the operator and detecting a placing (step 89A') in a section of the movement trajectory and/or by detecting a gesture movement (step 89B') by means of the movement trajectory (33) of the hand of the operator.

7. The method of claim 5 or 6, further comprising:
providing an association of gestures and processes;
determining a motion trajectory of the hand of the operator by evaluating the position data of the hand of the operator;
recognizing a gesture in a section of the motion trajectory; and
performing a process assigned to the gesture, such as booking a removal operation or booking a placing operation.

8. The method of claim 7, further comprising:
outputting (step 95) a sorting completion signal when the placing operation corresponds to a placing operation associated with the removed workpiece (9"); or
outputting (step 97) an error signal when the placing operation is different from a placing operation associated with the removed workpiece (9"), or monitoring (step 99) a placing operation of at least one removed workpiece (9") in a reject collecting point; and
associating the at least one removed workpiece (9") as a reject part and optionally including the reject part in a list of missing parts, and
further optionally outputting a supplementary production signal to a production control system (5), comparing production parameters of the removed workpiece (9") with a subsequent processing plan and, if the production parameters correspond with the subsequent processing plan and there is availability with respect to the removed workpiece (9"), supplementing the subsequent processing plan with a generation step for generating a replacement workpiece for the rejected workpiece.

9. The method of any one of the preceding claims, wherein the operator carries a sorting support unit (53) near his hand, and the position of the hand is determined by locating the position of the sorting support unit (53);
wherein in particular for the evaluation, the position of the hand is equated with the position of the sorting support unit (53); and
wherein the sorting support unit (53) optionally includes an active transmitter and/or a passive transmitter whose position is detected by the localizing system (51).

10. The method of any one of the preceding claims, wherein the position of the hand is determined by image-assisted localizing of the hand with the localizing system (51); and wherein the localizing system (51) in particular evaluates image data of one or more cameras.

11. A flatbed machine tool (3), in particular a laser cutting or punching flatbed machine tool, comprising:
a processing unit, in particular a laser cutting processing unit or a punching processing unit;
a control unit (8), in which a processing plan (16) is stored, for controlling the processing unit to generate workpieces (9), which are arranged next to one another spatially in accordance with a processing image data set (16');
a sorting table (21) for providing the arranged workpieces (9) for sorting after manufacture; and
a localizing system (51) for determining the position of an hand of an operator in space,
wherein the control unit (8) is adapted to perform the method according to one of the preceding claims.

12. The flatbed machine tool (3) of claim 11, further comprising:
at least one movable workpiece collecting point unit (13), optionally a reject collecting point; and
wherein the localizing system is a system for detecting and monitoring of movements of a sorting and placing operation, in particular for monitoring a movement trajectory (33) or a part of the movement trajectory that is associated with a removed workpiece (9") or with an object effecting the movement; and
the control unit (8) is adapted to evaluate the position data and optionally the gestures, in order to integrate, in particular to display, location context sensitive information about the environment of the hand of the operator in the sorting process, and optionally to control parameters of the placing process via gestures, in particular to book removal processes or placing operations.

13. The flatbed machine tool (3) of claim 11 or 12, further comprising:
a sorting support unit (53) carried near the hand of the operator and adapted to be locatable in position of the sorting support unit (53) with the localizing system (51),
wherein the sorting support unit (53) optionally has an active transmitter and/or a passive transmitter, the position of which is detected by the localizing system (51), and the localizing system (51) includes at least one antenna (55) for receiving signals from the sorting support unit (53).

14. The flatbed machine tool (3) of any one of claims 11 to 13, wherein the localizing system (5) further includes one or more cameras for image acquisition of the position of the hand of the operator, and/or
wherein the localizing system (51) further includes an evaluation unit (57) for determining the position of the hand of the operator on the basis of the position of the sorting support unit (53) from the antenna signals and/or from the detected image data, in particular for evaluating gestures associated with movement trajectories; and/or
wherein the sorting table (51) is part of a pallet exchanger of a flatbed machine tool.

15. The flatbed machine tool (3) of any one of claims 11 to 14, further comprising:
a projection unit (15) for projecting location context sensitive information, which includes as workpiece-specific information, for example, customer data, information about the subsequent process step, number of further identical parts, assigned workpiece collecting point, or order number for the at least one workpiece associated with the position of the hand of the operator, onto the at least one workpiece (9') associated with the position of the hand of the operator.

## Revendications

1. Procédé d'assistance d'un opérateur (11) lors d'une opération de triage de pièces (9) disposées sur une table de tri (21), qui ont été produites avec une machine-outil à banc plat, en particulier une machine-outil à banc plat de découpe au laser ou d'emboutissage (3), selon un plan d'usinage (16) en utilisant un système de localisation (51) pour déterminer une position d'une main d'un opérateur dans l'espace avec les étapes dans l'ordre suivant :
préparation (Etape 71) d'un jeu de données de position (16') du plan d'usinage (16), qui comprend les positions des pièces (9) produites avec le plan d'usinage (16) sur la table de tri (21),
saisie (Etape 73) d'une position de la main de l'opérateur avec le système de localisation (51),
ajustage (Etape 75) de la position de la main de l'opérateur avec les positions du jeu de données de position (16'),
identification (Etape 77) d'au moins une pièce (9') par le jeu de données de position de celle-ci, qui est attribuée à la position de la main de l'opérateur par son jeu de données de position, et
émission (Etape 79) d'un signal de tri, qui comprend l'information sur au moins une pièce (9') attribuée à la position de la main de l'opérateur.

2. Procédé selon la revendication 1, sachant que la main de l'opérateur sur la pièce posée la plus proche est identifiée en tant qu'au moins une pièce (9') attribuée à la position de la main de l'opérateur et/ou sachant que plusieurs pièces posées les plus proches de la main de l'opérateur sont identifiées comme pièces (9') attribuées à la position de la main de l'opérateur, et/ou
sachant que la pièce posée dans une direction de mouvement la plus proche de la main de l'opérateur est identifiée comme au moins une pièce (9') attribuée à la position de la main de l'opérateur.

3. Procédé selon la revendication 1 ou 2, sachant qu'une unité d'affichage (19) spécifique à l'assistance de tri est attribuée à la main de l'opérateur, sur laquelle est affichée l'information relative à au moins une pièce (9') attribuée à la position de la main de l'opérateur.

4. Procédé selon l'une quelconque des revendications 1 à 3, avec en plus
en se basant sur le signal de tri, préparation de l'information sensible au contexte local (Etape 81), qui comprend une information spécifique à la pièce, par exemple données du client, informations pour l'étape de processus suivante, nombre d'autres pièces identiques, point de collecte de pièces attribué ou numéro de commande pour au moins une pièce (9') attribuée à la position de la main de l'opérateur, et
avec en plus en option
projection (Etape 83) de l'information sensible au contexte local sur au moins une pièce (9') attribuée à la position de la main de l'opérateur,
sachant qu'en option une pièce à trier de préférence est optiquement marquée ou l'information concernant au moins une pièce (9') attribuée à la position de la main de l'opérateur, en particulier l'information sensible au contexte local, est superposée optiquement à la/aux pièce(s) en tant qu'inscription et/ou est affichée sur une unité d'affichage (19) spécifique à l'assistance de triage, en particulier une unité d'affichage spécifique aux points de collecte de pièces (43), des lunettes de données de l'opérateur (11) ou un écran de contrôle et/ou est émise en tant que signal clignotant.

5. Procédé selon l'une quelconque des revendications précédentes, avec en plus
identification et comptabilisation (Etape 91A) d'une opération de prélèvement, en option par détermination d'une trajectoire de mouvement (33) de la main de l'opérateur par évaluation des données de position de la main de l'opérateur et identification d'un mouvement de prélèvement dans une section de la trajectoire de mouvement (Etape 89A) et/ou par identification d'un mouvement de geste (Etape 89B) au moyen de la trajectoire de mouvement (33) de la main de l'opérateur, par laquelle une pièce prélevée (9") est identifiée, et
en option, émission (Etape 85) d'un signal de dépose pour la dépose assistée par le système de la pièce prélevée (9") sur une unité de point de collecte de pièces (13) prévue pour la pièce prélevée (9").

6. Procédé selon l'une quelconque des revendications précédentes, avec en plus
identification et comptabilisation (Etape 91B) d'une opération de dépose de la pièce prélevée (9), effectuée par un opérateur (11), en option, par détermination d'une trajectoire de mouvement de la main de l'opérateur après le prélèvement de la pièce (9") par évaluation des données de position de la main de l'opérateur et identification d'un mouvement de dépose (Etape 89A') dans une section de la trajectoire de mouvement et/ou par identification d'un mouvement de geste (Etape 89B') au moyen de la trajectoire de mouvement (33) de la main de l'opérateur.

7. Procédé selon la revendication 5 ou 6, avec en plus préparation et attribution de gestes et de processus, détermination d'une trajectoire de mouvement de la main de l'opérateur par évaluation des données de position de la main de l'opérateur,
identification d'un geste dans une section de la trajectoire de mouvement, et
exécution d'un processus attribué au geste, comme une comptabilisation d'une opération d'enlèvement ou une comptabilisation d'une opération de dépose.

8. Procédé selon la revendication 7, avec en plus émission (Etape 95) d'un signal de terminaison d'opération de tri, lorsque l'opération de dépose correspond à une opération de dépose attribuée à la pièce prélevée (9"), ou
émission (Etape 97) d'un signal d'erreur, lorsque l'opération de dépose s'écarte d'une opération de dépose attribuée à la pièce prélevée (9"), ou contrôle (Etape 99) d'une opération de dépose au moins d'une pièce prélevée (9") dans un point de collecte de rejets, et
attribution d'au moins une pièce prélevée (9") en tant que pièce de rejet et en option enregistrement de la pièce de rejet dans une liste de pièces défectueuses, et
en plus en option, émission d'un signal de production complémentaire sur un système de gestion de production (5), ajustage des paramètres de production de la pièce prélevée (9") avec un plan d'usinage suivant et, en cas de concordance des paramètres de production avec le plan d'usinage suivant et d'une disponibilité concernant la pièce prélevée (9"), complément du plan d'usinage suivant avec une étape de production pour produire une pièce de remplacement pour la pièce de rejet.

9. Procédé selon l'une quelconque des revendications précédentes, sachant que l'opérateur porte une unité d'assistance de tri (53) près de sa main et la position de la main est déterminée par localisation de la position de l'unité d'assistance de tri (53),
sachant en particulier que pour l'évaluation, la position de la main est mise au même niveau que la position de l'unité d'assistance de tri (53), et sachant que l'unité d'assistance de tri (53) comporte en option un émetteur actif et/ou un émetteur passif, dont la position est saisie par le système de localisation (51).

10. Procédé selon l'une quelconque des revendications précédentes, sachant que la position de la main est déterminée par une localisation de la main assisté par image avec le système de localisation (51) et sachant que le système de localisation (51) évalue en particulier les données d'image d'une ou de plusieurs caméras.

11. Machine-outil à banc plat (3, en particulier machine-outil à banc plat de découpe au laser ou d'emboutissage (3), avec
une unité d'usinage, en particulier une unité d'usinage à découpe au laser ou d'emboutissage,
une unité de commande (8), dans laquelle un plan d'usinage (16) est mémorisé, pour commander l'unité d'usinage destinée à produire des pièces (9) disposées spatialement l'une près de l'autre selon un jeu de données d'image d'usinage (16'),
une table de tri (21) pour préparer les pièces (9) disposées pour le triage une fois la fabrication terminée, et
un système de localisation (51) pour déterminer la position d'une main d'un opérateur dans l'espace, sachant que l'unité de commande (8) est constituée pour exécuter le procédé selon l'une quelconque des revendications précédentes.

12. Machine-outil à banc plat (3) selon la revendication 11, avec en plus
au moins une unité de point de collecte des pièces (13), en option un point de collecte des rejets, et
sachant que le système de localisation (51) est un système destiné à saisir et contrôler des mouvements d'une opération de triage et de dépose, en particulier pour contrôler une trajectoire de mouvement (33) ou une trajectoire partielle de mouvement, qui sont attribuées à une pièce prélevée (9") ou à un objet causant le mouvement, et
l'unité de commande (8) est constituée à cet effet pour évaluer les données de position et en option les gestes pour intégrer, en particulier afficher une information sensible au contexte local concernant l'environnement de la main de l'opérateur dans l'opération de tri et en option concernant les gestes, piloter les paramètres de l'opération de dépose, en particulier comptabiliser les opérations de prélèvement ou les opérations de dépose.

13. Machine-outil à banc plat (3) selon la revendication 11 ou 12, avec en plus une unité d'assistance de tri (53) portée près de la main de l'opérateur, qui est constituée pour la localisation de la position de l'unité d'assistance de tri (53) avec le système de localisation (51),
sachant que l'unité d'assistance de tri (53) comporte en option un émetteur actif et/ou un émetteur passif, dont la position est saisie par le système de localisation (51) et le système de localisation (51) comporte au moins une antenne (55) pour recevoir des signaux de l'unité d'assistance de tri (53).

14. Machine-outil à banc plat (3) selon l'une quelconque des revendications 11 à 13, sachant que le système de localisation (5) comporte en plus une ou plusieurs caméras pour la saisie d'images de la position de la main de l'opérateur, et/ou
sachant que le système de localisation (51) comporte en plus une unité d'évaluation (57) pour déterminer la position de la main de l'opérateur à l'aide de la position de l'unité d'assistance de tri (53) à partir des signaux d'antenne et/ou à partir des données d'image saisies, en particulier pour évaluer des gestes attribués par des trajectoires de mouvement, et/ou sachant que la table de tri (51) fait partie d'un changeur de palettes d'une machine-outil à banc plat.

15. Machine-outil à banc plat (3) selon l'une quelconque des revendications 11 à 14, en plus avec une unité de projection (15) pour projeter une information sensible au contexte local, qui comprend une information spécifique à la pièce, par exemple données du client, informations pour l'étape de processus suivante, nombre d'autres pièces identiques, point de collecte de pièce attribué ou numéro de commande pour au moins une pièce attribuée à la position de la main de l'opérateur, sur au moins une pièce (9') attribuée à la position de la main de l'opérateur.
